# EUROPEAN PATENT SPECIFICATION

(11) **EP 2 605 665 B1**
(45) Date of publication and mention of the grant of the patent: **08.11.2017**
(21) Application number: 11752013.0
(22) Date of filing: 18.08.2011
(51) Int. Cl.: A23G 4/06, A23G 4/00, A23G 4/20

(54) **MOUTH-MOISTENING GUM COMPOSITIONS AND PRODUCTS CONTAINING THE SAME**
MUNDBEFEUCHTENDE KAUGUMMIZUSAMMENSETZUNGEN UND PRODUKTE DAMIT
COMPOSITIONS DE CHEWING-GUM HUMECTANT LA BOUCHE ET PRODUITS LES CONTENANT

(30) Priority: 18.08.2010 US 374875 P
(43) Date of publication of application: 26.06.2013
(73) Proprietor: Intercontinental Great Brands LLC, East Hanover, NJ 07936 (US)
(72) Inventor: ANASTASIOU, Theodore, James, Holmdel, NJ 07733 (US); EUAN, Dorothy, Ellen, New York, NY 10010 (US); FERRI, Dino, Carlo, Lake Hiawatha, NJ 07034 (US); FROEBE, Claudia, L., Franklin Park, NJ 08823 (US); GUAN, Junjie, Edgewater, NJ 07020 (US); HOANG, Tinyee, Parsippany, NJ 07054 (US); LEVENSON, Deborah, Ann, Morristown, NJ 07960 (US); MAY, Joycelyn, P., West Orange, NJ 07052 (US); MICHAELIDOA, Tasoula, A., Cresskill, NJ 07626 (US); OSBORNE, Deborah, Lynn, Lake Hiawatha, NJ 07034 (US); SHETTY, Aditi, Morris Plains, NJ 07950 (US)
(74) Representative: Wilson Gunn
(86) International application number: PCT/US2011/048200
(87) International publication number: WO 2012/024469

(56) References cited:
- WO-A2-2007/144800
- WO-A2-2010/096542
- JP-A- 2001 178 395
- US-A1- 2006 204 551

## Description

### FIELD

This disclosure generally relates to a chewing gum composition that imparts a mouth-moistening effect when orally consumed by an individual.

### BACKGROUND OF THE INVENTION

Chewing gums available today generally contain a water-insoluble gum base, sweeteners, natural or artificial flavors, and a variety of additional components tailored to provide specific release characteristics. For example, some chewing gums can include plasticizers or softeners to improve consistency during chew. Other chewing gums, for instance, can include physiological cooling agents to provide a cooling sensation upon consumption by the user. Oral delivery of actives, such as flavors, sweeteners, sensates and therapeutic agents, for their intended purpose, is one of the main objectives of chewing gum compositions.

Consumers sometimes desire a chewing gum composition that can provide a refreshing and mouth-watering effect. Some individuals can experience dryness in the mouth from time to time due to a variety of physiological and environmental factors. A dry mouth can be caused by a dry or low humidity environment. A dry mouth can also be caused by reduced levels of saliva and can make an individual's mouth feel sticky and uncomfortable. Some individuals can even suffer from what is referred to as "xerostomia," a chronic condition of abnormal dryness in the mouth.

A dry mouth can lead to difficulties in tasting, chewing, swallowing, and speaking, as well as to a variety of more serious medical conditions. Prescription medications and artificial saliva are available for severe cases of dry mouth. Individuals experiencing low or moderate levels of mouth dryness, however, often desire consumables that provide a sensation of hydration or mouth moistening. Although water is often sought for relief of mouth dryness, it is not always convenient or portable, and it does not always provide long-lasting relief.

Thus, there is a need, therefore, for a chewing gum composition that can provide a sensation of mouth moistening upon consumption. Chewing gum products are portable and so can be consumed whenever a feeling of dry mouth is experienced by an individual. Further, mouth moistening in combination with sweetness, flavoring, and refreshing sensations can be an enjoyable experience for the consumer, even in the absence of optional functions such as breath or medicinal treatments that can also be contained in a chewing gum product.

JP 2001 178395 describes a xylitol-containing composition having good taste and flavor, that also contains spilanthol to reduce the sharp sweetness and uncomfortable burning aftertaste of xylitol; US 2006/204551 describes food or beverage additives that enhance salivation upon consumption of the food or beverage, comprising a food acid and a tingling sensate; WO 2007/144800 describes a sensate composition comprises a salivating component, a tingling component and a flavor, the salivating component being formed of at least a mixture of citric, malic and succinic acid, or of their salts.

U.S. Patent Application Publication No. 2007/0031561 A1 discloses a composition for a confectionery product that imparts a mouth-moistening effect when orally consumed by an individual. More specifically, the composition is a blend of a sweetening composition, food-grade acid composition, and a cooling agent that reduces or eliminates the perception of mouth dryness in an individual. Such compositions can include hard candy as well as chewy candy, chewing gum, and center-filled candies.

The mouth-moistening composition of U.S. Patent Application Publication No. 2007/0031561 A1 (Lakkis et al.) contains a relatively high amount of food-grade acid as well as a cooling agent system that avoids the use of menthol due to its bitterness. A high amount of food-grade acid can produce mouth moistening in the absence of menthol. In addition, food acid can exacerbate the potential bitterness of menthol. Also, high levels of acid can result in candies, especially hard candies, being more hygroscopic and less stable to moisture.

U.S. Patent Application Publication No. 2009/0155445 A1 discloses the use of spilanthol in an extruded matrix or powdered form for use in chewing gums or other candies, in relatively low amounts. An extract of spilanthol is combined with a salivating composition comprising citric, malic, succinic acid, and/or glycyrrhizin to form a sensate composition. In contrast, European Patent Application No. EP 1121927 A2 discloses, in various food, pharmaceutical, or personal care products, the use of a sensate composition including at least one cooling sensate, warming sensate, and spilanthol tingling sensate. U.S. Patent Application Publication No. 2003/0072842 A1 discloses the use of jambu in a chewing gum product as a sensorally active component in relatively high amounts.

Spilanthol is an alkylamide, (2E,5Z,8E)-deca-2,6,8-trienoic acid N-isobutyl amide, which can be found in the leaves and flowers of such plants as *Spilanthes acmella.* Spilanthol is known to have trigeminal and saliva-inducing effects. An oleoresin composition extracted from such plants, known as jambu, has been known as a "tingling sensate" for use in confectionery compositions. Other alkylamides can be present in an extract from jambu. Examples of the use of a jambu oleoresin as a tingling sensate can be found in U.S. Patent No. 6,780,443. Jambu extracts, however, can produce an annoying tingling sensation or pungent flavor. U.S. Patent No. 6,780,443, which employs jambu in relatively high amounts, requires that jambu be combined with a warmth-producing agent.

There remains a need for new and improved chewing gum compositions that can provide a mouth-moistening and refreshing experience, which compositions will not have unwanted side effects, such as off-flavors, undue sourness, harshness, or annoying tingling. It would also be desirable to provide a clean, high-quality flavor characterized by long-lasting mouth-moistening characteristics.

### BRIEF DESCRIPTION OF THE INVENTION

Disclosed herein is a chewing gum composition comprising
(a) a chewing gum base, sweetener composition, softener, 0.05 to 1.0 weight percent menthol, and flavorant; and
(b) 75 to 300 parts per million, by weight of the chewing gum composition, of spilanthol.

Another embodiment is a chewing gum chewing gum composition comprising:
(a) a chewing gum base, sweetener composition, softener, and flavorant;
(b) 75 to 300 parts per million by weight of the chewing gum composition, of spilanthol;
(d) a food-grade acid composition;
(e) a mint flavorant that is natural product obtained from a plant of the Menthe genus and the Lamiaceae family, or an artificial counterpart of the natural product;
(f) 0.05 to 1.0 wt.%, by weight of the chewing gum composition, of menthol; and
(g) 0.025 to 1.0 wt.%, by weight of the chewing gum composition, of a physiological cooling compound selected from the group consisting of carboxylamides, menthyl esters, and combinations thereof.

In another embodiment, a chewing gum product comprises a core and an outer shell, wherein said core and said outer shell have different chew textures, the core having a soft chew and the outer shell having a firm and crystalline feel, wherein:
(a) said core comprises a chewing gum composition comprising a chewing gum base, sweetener composition, softener, and flavorant; and
(b) said outer shell comprises 20 to 300 parts per million, by weight of the chewing gum composition, of spilanthol.

In some embodiments, the addition of spilanthol provides a significant increase of mouth-watering effect of at least about 5%, specifically at least about 10%, or at least 0.1 on a scale of 1 to 5, specifically at least about 0.2. Similarly, some embodiments can provide increased mouth dryness elimination intensity and/or a refreshment intensity.

Another embodiment is directed a packaged chewing gum product comprising:
(a) a plurality of individual pieces of chewing gum product, wherein each piece of chewing gum product comprises a chewing gum composition according to claim 1. wherein said pieces have a mouth-moistening effect of at least about 5 percent higher compared to the same product without the spilanthol component; and
(b) a package assembly that contains said plurality of individual pieces of chewing gum product, said package assembly having indicia placed on an outer surface, said indicia being indicative of refreshment intensity and/or mouth-moistening effect.

### BRIEF DESCRIPTION OF THE DRAWINGS

Referring now to the figures, which are directed to exemplary embodiments:

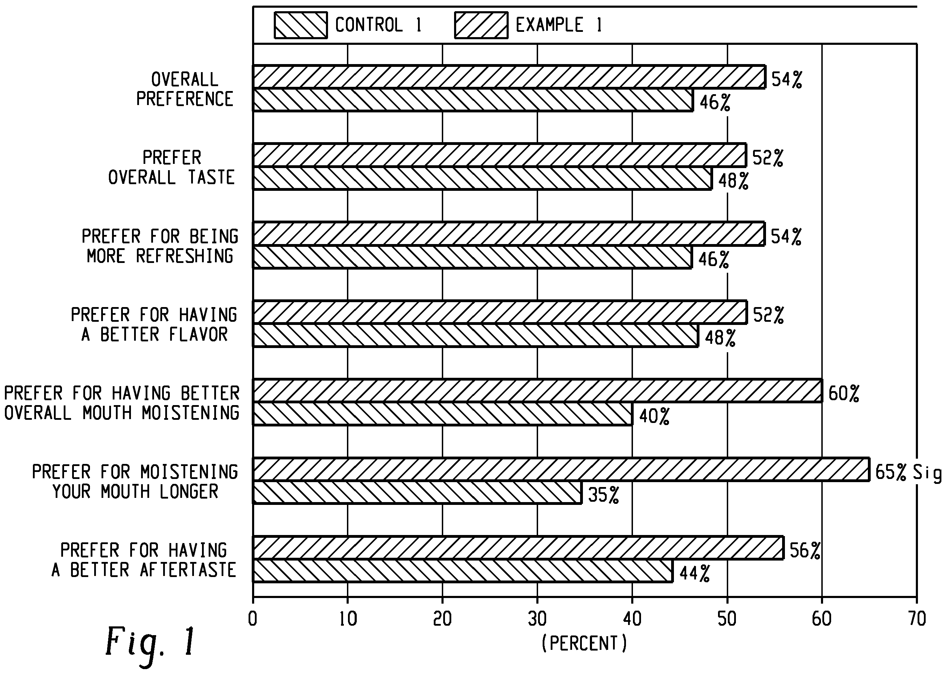

Figure 1 is a chart showing consumer test preferences for a chewing gum composition containing spilanthol according to Example 1 compared to the same chewing gum composition without the spilanthol component;

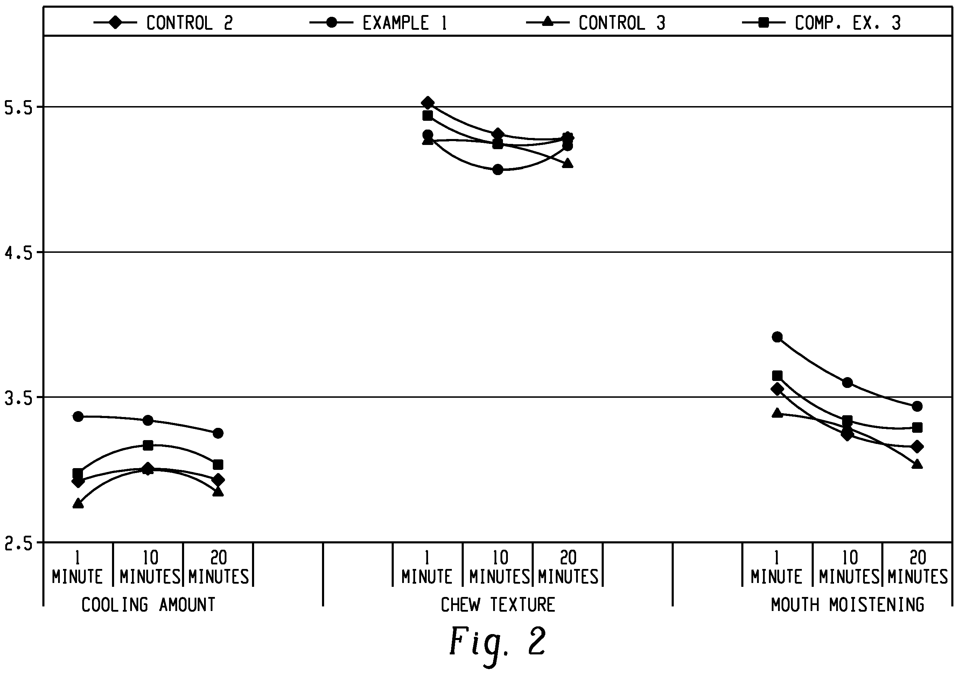

Figure 2 is a graph showing consumer test evaluations relating to cooling intensity, chew texture, and mouth moistening intensity for a chewing gum composition containing spilanthol according to Example 1 of the present invention compared to the same chewing gum composition without the spilanthol component or compared to alternative mouth-moistening test formulations;

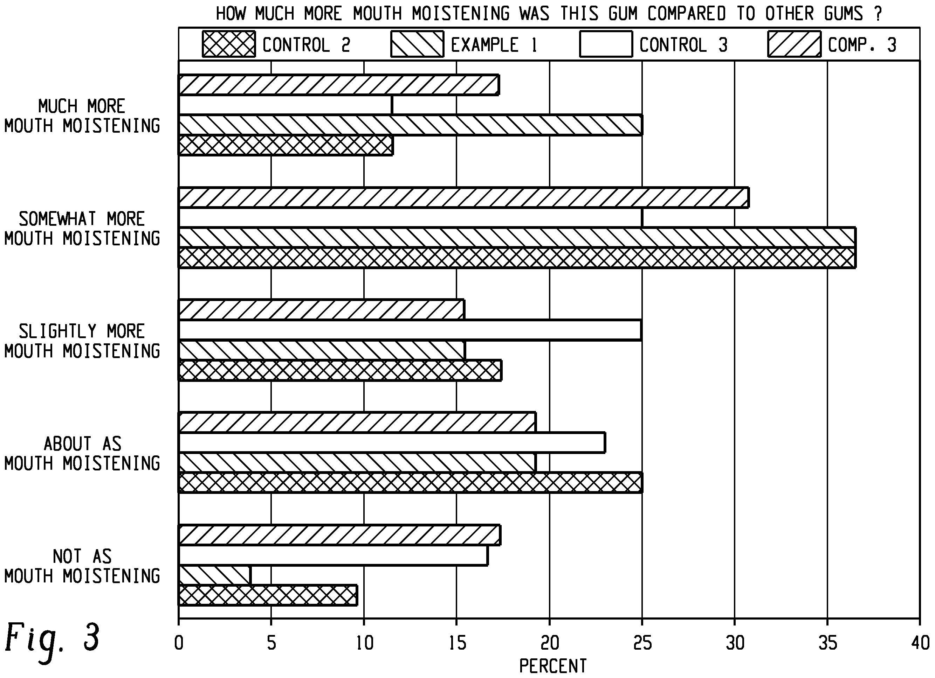

Figure 3 is a chart showing the increase in mouth moistening for a chewing gum composition containing spilanthol according to Example 1 of the present invention compared to the same chewing gum composition without the spilanthol component or compared to an alternative mouth-moistening formulation; and

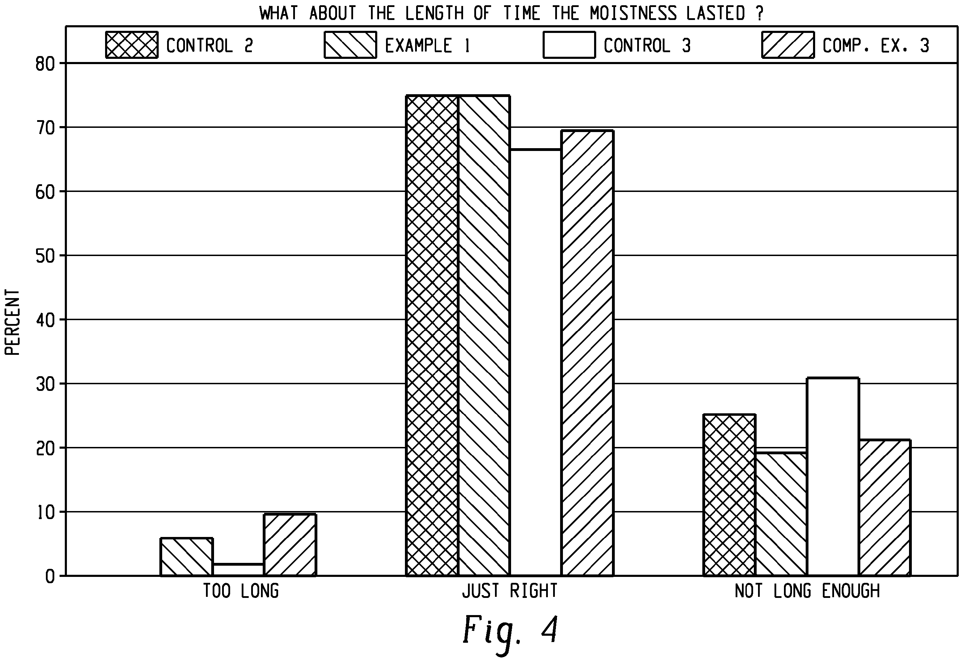

Figure 4 is a chart showing the length of time moistness lasted for a chewing gum composition containing spilanthol according to Example 1 of the present invention compared to the same chewing gum composition without the spilanthol component or compared to an alternative mouth-moistening formulation.

### DETAILED DESCRIPTION OF THE INVENTION

Embodiments described herein provide a chewing gum product that imparts mouth-moistening perception to an individual upon consumption. The compositions can thereby alleviate the feeling of dry mouth that is associated with a variety of physiological and environmental factors.

As used herein, the term "mouth-moistening" refers to an oral sensation of hydration, which can involve increased salivation that is perceived by an individual during and following consumption of the compositions described herein. The oral sensation of hydration also can refer to a reduced perception of dryness or stickiness in the mouth.

As used herein, the term "confection," "confectionery," or "confectionery product" may include any conventional hard or soft confectionery. Such confectioneries include those chewable forms such as soft candies including, but not limited to, gum drops, licorice, fruit snacks, starch based jellies, gelatin based jellies, pectin based jellies, carageenan based jellies, agar based jellies, konjac based jellies, jelly beans, chewy candy, starch candy, nougat, nougatine, toffee, taffy, marshmallow, fondant, fudge, marzipan, chocolate, compound coating, carob coating, chewing gum, and caramel. Also included are confections such as compressed tablets, hard boiled candy, nut brittles, pastilles, pralines, nonpareils, dragees, lozenges, sugared nuts, comfits, and aniseed balls.

As will be described in detail herein, chewing gum compositions that contain spilanthol at specified levels in combination with other selected ingredients of a chewing gum product composition can unexpectedly and desirably relieve a feeling of dry mouth by producing a sensation of mouth moistening, without unwanted properties such as an annoying tingling sensation or an undesirable off-taste. In one embodiment, other components of the chewing gum composition, such as a low level of sweetness and a slight sourness, which stimulate salivation, and/or long-lasting cooling or refreshment can also contribute to the sensation of mouth moistening or refreshment. Still other factors, such as the particular form or location of the spilanthol component in the chewing gum composition or product can also contribute to the sensation of mouth-moistening or refreshment.

Chewing gum compositions contain a gum base, the flavor enhancing composition, and various additives. In particular, a chewing gum composition according to the present invention comprises, in addition to a chewing gum base, sweetener composition, softener, 0.05 to 1.0 weight percent menthol, and flavorant, also about 75 to about 300 parts per million (ppm), by weight of the chewing gum composition, of spilanthol. As used herein "gum" includes both chewing gum and bubble gum formulations.

In one embodiment, the chewing gum composition comprises spilanthol that is provided in the form of a synthetic spilanthol compound and/or a liquid extract, derived from a plant species that comprises 20 to 70% wt.% of spilanthol. The liquid extract can be jambu oleoresin. Alternatively, the composition can comprise a powder comprising spilanthol in the amount of about 2 to 10 wt.% spilanthol, specifically about 4 to 8 wt.%, more specifically about 5 to 7 wt.% of the powder. Thus, the powder can be used, for example, in amounts of 1000 to 6000 ppm, specifically 2000 to 5000 ppm, more specifically 2500 to 4500 ppm in some embodiments. Such powders are commercially available from various commercial sources, for example, STABIL-LOK Natural Jambu Fl. Powder from Robertet Co. or Fermenich Tingling Flexarome® Spilanthol from Ferminich SA (Geneva, Switzerland), which contains 6 wt.% spilanthol content in combination with a carbohydrate such as cyclodextrin. Spray dry carriers can include carbohydrates and medium chain triglycerides, in which spilanthol is the hydrophobic phase of a carbohydrate matrix emulsion that is spray dried. Spilanthol can advantageously be combined with food acids in powder form. Such powders are disclosed also in WO 2007/144800 and US 2009/0155445.

Thus, spilanthol can be in the form of a solid product prepared by common extrusion processes, i.e. encapsulated in a matrix such as are described for example in prior art documents U.S. Patent Nos. 6,607,771, 6,607,778, and 6,932,982; and International Patent Application Publication No. WO 03/56938. Typically these are products obtained via extrusion of a carbohydrate melt in which the Jambu oleoresin has been incorporated. Such extrusion methods typically comprise preparing a mixture of a continuous phase carrier containing the component to be encapsulated therein and having a low water content so as to ensure that the glass transition temperature of said mixture is the glass transition temperature of the final product; heating said mixture within a screw extruder to a temperature comprised between 90 and 130°C to form a molten mass; and extruding the molten mass through a die. The molten mass can then be chopped directly as it exits the die, i.e., at the temperature of extrusion, or be cooled before chopping, to form particles of the desired dimension.

Conventional extrusion processes of this type have been generally described in the prior art, including that cited above, and also particularly in relation to encapsulation of labile flavor and fragrance materials, as will be appreciated by the skilled artisan. The process conditions for the manufacturing of the extruded Jambu oleoresin compounds forming part of the sensate composition of the invention can be any of the generally known melt extrusion methods described typically in prior art documents cited above as well as in International Patent Application Publication Nos. WO 2004/082393 and WO 2006/038067, which describe in detail the nature of the carriers preferred for the preparation of such products. Typical extruded products convenient for the tingling component of the sensate composition are similar to those available from Firmenich SA, Geneva, Switzerland, and commercialized under the trade names Durarome® and Flexarome®. Specifically maltodextrine having a dextrose equivalent (DE) between 10 and 18, and mixtures thereof with hydrogenated starch hydrolysates, can be used as the matrix carriers of the extruded spilanthol-containing component in powder form.

It has been found that the use of spilanthol in the form of a powder can exhibit a faster release of spilanthol, a higher release rate than jambu oleoresin and, therefore, can produce a higher intensity of initial hydration and/or tingle. Such an immediate sensation was found to enhance initial flavor intensity, according to consumer testing. In combination with warming agents mentioned below, tingling or warm prickling sensation can be further increased, if desired, in a chewing gum product. This synergistic result provided more sensory complexity to the overall flavor in mint and fruit flavored chewing gum products. Specific mint flavors include peppermint and specific fruit flavors include citrus and acai fruit, for example.

In another embodiment, the present chewing gum composition can be a blend of different forms of spilanthol. For example, the chewing gum composition can be a blend of a synthetic spilanthol and a spilanthol-containing plant extract. Alternatively, the composition can comprise spilanthol both in the form of a powder comprising spilanthol and spilanthol in the form of a liquid extract or synthetic compound, wherein the concentration of spilanthol in total is about 75 to about 300 parts per million.

In another embodiment, a chewing gum product comprises a core and an outer shell wherein said core and said outer shell have different chew textures, the core having a soft chew and the outer shell having a firm and crystalline feel, wherein (a) said core comprises a chewing gum composition comprising a chewing gum base, sweetener composition, softener, and flavorant; and (b) said outer shell comprises about 40 to about 300 ppm, specifically 80 to 220, more specifically 90 to 175, most specifically 100 to 150 ppm, by weight of the chewing gum composition, of spilanthol.

Thus, the spilanthol that is used to contribute to mouth-moistening in the present product is present at relatively low levels compared to a flavorant, in order to reduce or moderate its characteristics as tingling sensate in favor of mouth-moistening. The compound spilanthol is an unsaturated alkylamide, specifically an isobutylamide, having the chemical name N-isobutyl-2E,6Z,8E-decatrienamide or (2E,6Z,8E)-deca-2,6,8-trienoic acid N-isobutyl amide. Spilanthol can be provided by adding ajambu extract, for example, jambu oleoresin, which contains spilanthol. Other alkylamides extracted from jambu can be included, but spilanthol is the primary active compound and is typically present in the oleoresin in an amount of 20 to 50 wt.%, specifically 25 to 40 weight percent. Other details of the source and preparation of jambu extracts can be found in U.S. Patent No. 6,780,443. Spilanthol can be obtained from plants, including the leaves and flower heads, of the genera genera *Achilla* (yarrow), *Acmella* (spotflower), *Echinacea* (purple cornflower), and *Spilanthes* (spilanthes) of the family *Asteraceae.* The compound spilanthol can also be extracted from grass root (in which spilanthol is referred to as "affinin"). For example, spilanthol is present in *Heliopisis longipes* roots in concentrations as high as 1 wt.%.

In addition to botanical sources, spilanthol can be prepared synthetically, i.e. not obtained as a natural product. Spilanthol can also be prepared synthetically, as disclosed in WO 2009/091040. Synthetic spilanthol is commercially available, for example, from Takasago International Corp. (Tokyo, JP). Jambu oleoresin (*Spilanthes Acmella*) or other spilanthol-containing extracts are commercially available from various vendors, including Robertet, Inc. (Grasse, France.)

The chewing gum product composition for the chewing gum product comprises spilanthol in the amount of about 75 to about 300 parts per million (ppm), based on total weight of the spilanthol-containing chewing gum product composition. Specifically, the chewing gum product composition comprises spilanthol in the amount of about 80 to about 220 ppm. Alternately, the amount of spilanthol can be represented by about 90 to about 175 parts per million, preferably 100 to about 150 parts per million. When jambu oleoresin is used, typically a 30 weight percent spilanthol extract in a solvent such as ethanol, appropriate calculations are necessary, based on total weight of the spilanthol-containing chewing gum product composition in the final product. Accordingly, the amount of jambu oleoresin can be adjusted based on the concentration of spilanthol in a particular jambu oleoresin product or extract. Amounts above about 300 ppm have been found to produce undesirable properties, for example, off-taste, bitterness, even burning in some formulations. Below 75 ppm, the effectiveness of spilanthol in a chewing gum formulation for present mouth-moistening purposes is insufficient.

Synthetic spilanthol, being more pure than botanical sources, can be distinguished to some extent based on taste sensations. Synthetic spilanthol can have a purity of at least about 90 percent. In some embodiments, synthetic spilanthol can provide relatively higher mouth-moistening relative to tingling or heating/cooling sensations, compared to, for example, equivalent amounts of spilanthol in jambu. Synthetic spilanthol can provide a cleaner profile and/or less tingling, based on taste testing, than some comparable plant extracts. In one embodiment a combination of synthetic spilanthol and a spilanthol-containing plant extract is used. For example, within the given range of 75 ppm to 300 ppm spilanthol, the amount of spilanthol provided by synthetic spilanthol can vary from 20 to 80 wt.% and the amount of spilanthol provided by plant extract such as jambu can vary from 80 to 20 wt.%.

The gum compositions of the disclosed herein can be coated or uncoated, and be in the form of slabs, sticks, pellets, balls, and the like. The composition of the different forms of the gum compositions will be similar but can vary with regard to the ratio of the ingredients. For example, coated gum compositions can contain a lower percentage of softeners. Pellets and balls can have a chewing gum core, which has been coated with either a sugar solution or a sugarless solution to create the hard shell. Slabs and sticks are usually formulated to be softer in texture than the chewing gum core. In some cases, a hydroxy fatty acid salt or other surfactant actives can have a softening effect on the gum base. In order to adjust for any potential undesirable softening effect that the surfactant actives can have on the gum base, it can be beneficial to formulate a slab or stick gum having a firmer texture than usual (i.e., use less conventional softener than is typically employed).

Center-filled gum is another common gum form. The gum portion has a similar composition and mode of manufacture to that described above. However, the center-fill is typically an aqueous liquid or gel, which is injected into the center of the gum during processing. The spilanthol-containing component could optionally be incorporated into the center-fill during manufacture of the fill, incorporated directly or into the chewing gum portion of the total gum composition or both.

The chewing gum composition comprises a gum base, bulk sweeteners, high intensity sweeteners, flavorants, coloring agents, sensates, and any other optional additives, including throat-soothing agents, spices, tooth-whitening agents, breath-freshening agents, vitamins, minerals, caffeine, drugs (e.g., medications, herbs, and nutritional supplements), oral care products, and combinations comprising at least one of the foregoing.

Generally, the chewing gum composition comprises a water-insoluble gum base portion and a water soluble bulk portion. The gum base can vary greatly depending upon various factors such as the type of base desired, the consistency of gum desired, and the other components used in the composition to make the final chewing gum product. The gum base can be any water-insoluble gum base known in the art, and includes those gum bases utilized for chewing gums and bubble gums. Illustrative examples of suitable polymers in gum bases include both natural and synthetic elastomers and rubbers, for example, substances of vegetable origin such as chicle, crown gum, nispero, rosadinha, jelutong, perillo, niger gutta, tunu, balata, gutta-percha, lechi-capsi, sorva, gutta kay, and the like. Synthetic elastomers such as butadiene-styrene copolymers, polyisobutylene, isobutyleneisoprene copolymers, polyethylene, a combination thereof, and the like are also useful. The gum base can include a non-toxic vinyl polymer, such as polyvinyl acetate and its partial hydrolysate, polyvinyl alcohol, or a combination comprising at least one of the forgoing. When utilized, the molecular weight of the vinyl polymer can range from about 3,000 up to and including about 94,000.

The amount of gum base employed will vary greatly depending upon various factors such as the type of base used, the consistency of the gum desired, and the other components used in the composition to make the final chewing gum product. In general, the gum base will be present in amounts of about 5 wt % to about 94 wt % of the final chewing gum composition, or in amounts of about 15 wt % to about 45 wt %, and more specifically in amounts of about 15 wt % to about 35 wt %, and most specifically about 20 wt % to about 30 wt % of the chewing gum product.

The gum base composition can contain conventional elastomer solvents to aid in softening the elastomer base component, for example trepanned resins such as polymers of alpha-pinene or beta-pinene, methyl, glycerol or pentaerythritol esters of rosins or modified rosins and gums, such as hydrogenated, dimerized or polymerized rosins, or combinations comprising at least one of the foregoing resins, the pentaerythritol ester of partially hydrogenated wood or gum rosin, the pentaerythritol ester of wood or gum rosin, the glycerol ester of wood rosin, the glycerol ester of partially dimerized wood or gum rosin, the glycerol ester of polymerized wood or gum rosin, the glycerol ester of tall oil rosin, the glycerol ester of wood or gum rosin, the partially hydrogenated wood or gum rosin, the partially hydrogenated methyl ester of wood or rosin, and the like. The elastomer solvent can be used in amounts of about 5 wt % to about 75 wt %, of the gum base, and specifically about 45 wt % to about 70 wt % of the gum base.

In addition to a water insoluble gum base portion, a typical chewing gum composition includes a water soluble bulk portion and one or more flavoring agents. The water soluble portion can include bulk sweeteners, high-intensity sweeteners, flavoring agents, softeners, emulsifiers, coloring agents, acidulants, fillers, antioxidants, and other conventional chewing gum additives that provide desired attributes. Other conventional chewing gum additives known to one having ordinary skill in the art can also be used in the gum base.

Conventional additives can be included in the gum base in effective amounts such as plasticizers or softeners to provide a variety of desirable textures and consistency properties. Because of the low molecular weight of these components, the plasticizers and softeners are able to penetrate the fundamental structure of the gum base making it plastic and less viscous. Suitable plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and a combination comprising at least one of the foregoing. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, and the like can also be incorporated into the gum base to obtain a variety of desirable textures and consistency properties. These additives are generally used in amounts of up to about 30 wt % of the gum base, specifically about 3 wt % to about 20 wt % of the gum base.

When a wax is present in the gum base, it softens the polymeric elastomer mixture and improves the elasticity of the gum base. The waxes employed will have a melting point below about 60°C, and preferably between about 45°C and about 55°C. The low melting wax can be a paraffin wax. The wax can be present in the gum base in an amount from about 6% to about 10%, and preferably from about 7% to about 9.5%, by weight of the gum base.

In addition to the low melting point waxes, waxes having a higher melting point can be used in the gum base in amounts up to about 5%, by weight of the gum base. Such high melting waxes include beeswax, vegetable wax, candelilla wax, carnuba wax, most petroleum waxes, and the like, and mixtures thereof.

The gum base can include effective amounts of bulking agents such as mineral adjuvants, which can serve as fillers and textural agents. Suitable mineral adjuvants include calcium carbonate, magnesium carbonate, alumina, aluminum hydroxide, aluminum silicate, talc, tricalcium phosphate, tricalcium phosphate and the like, which can serve as fillers and textural agents. These fillers or adjuvants can be used in the gum base in various amounts. Specifically the amount of filler, when used, will be present in an amount of greater than about 0 wt % to about 60 wt % of the gum base, and more specifically from about 20 wt % to about 30 wt % of the gum base.

Additional bulking agents (carriers, extenders) suitable for use include sweetening agents selected from the group consisting of monosaccharides, disaccharides, polysaccharides, sugar alcohols; polydextrose; maltodextrins; minerals, such as calcium carbonate, talc, titanium dioxide, dicalcium phosphate, and a combination comprising at least one of the foregoing. Bulking agents can be used in amounts up to about 90 wt % of the final gum composition, specifically about 40 wt % to about 70 wt %, and about 50 wt % to about 65 wt % of the gum composition being most preferred.

Suitable emulsifiers include distilled monoglycerides, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, gum arabic, acacia gum, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate / medium chain triglycerides, glyceryl dioleate, glyceryl oleate, glyceryl lacto esters of fatty acids, glyceryl lacto palmitate, glyceryl stearate, glyceryl laurate, glycerly dilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate lecithin, ammonium phosphatide, sucrose esters of fatty acids, sucroglycerides, propane-1,2-diol esters of fatty acids, and combinations comprising at least one of the foregoing.

Suitable thickening agents include cellulose ethers, (e.g., hydroxyethyl cellulose, hydroxypropylmethyl cellulose, or hydroxypropyl cellulose) methylcellulose, carboxyl methylcellulose, and a combination comprising at least one of the foregoing. Polymers are also useful thickeners, such as carbomer, polyvinyl pyrrolidone, carboxymethyl cellulose, polyvinyl alcohol, sodium alginate, polyethylene glycol, natural gums like xanthan gum, tragacantha, guar gum, acacia gum, arabic gum, water-dispersible polyacrylates like polyacrylic acid, methylmethacrylate copolymer, carboxyvinyl copolymers.

Conventional methods of making chewing gum compositions are known to those of ordinary skill in the art. Various components can be incorporated into an otherwise conventional chewing gum composition using standard techniques and equipment. In one exemplary process, a gum base is heated to a temperature sufficiently high to soften the base without adversely effecting the physical and chemical make up of the base, which will vary depending upon the composition of the gum base used, and is readily determined by those skilled in the art without undue experimentation. For example, the gum base can be conventionally melted to about 60°C to about 160°C, or melted to about 150°C to about 175°C, for a period of time sufficient to render the base molten, e.g., about thirty minutes, just prior to being admixed incrementally with the remaining ingredients of the base such as the plasticizer, fillers, the bulking agent or sweeteners, the softener and coloring agents to plasticize the blend as well as to modulate the hardness, viscoelasticity and formability of the base, and the flavor enhancing composition (as a concentrate with other additives or separately). Mixing is continued until a uniform mixture of the gum composition is obtained. Thereafter the gum composition mixture can be formed into desirable gum shapes, i.e., stick, slab, pellet, ball, or the like.

Alternate gum processes or manufactures can be employed using standard techniques and equipment known to those skilled in the art. The apparatus useful in accordance with some embodiments comprises mixing and heating apparatus well known in the chewing gum manufacturing arts, and therefore the selection of the specific apparatus will be apparent to the skilled artisan.

In some embodiments, a method of preparing a stain-removing gum composition includes heating a gum base to soften the base and then mixing the softened gum base with a chelating agent; and a surfactant including a fatty acid salt and at least one other anionic or nonionic surfactant so as to obtain a substantially homogeneous mixture. The method further includes cooling the mixture and forming the cooled mixture into individual gum pieces. The fatty acid salt can be a hydroxy fatty acid salt. In some embodiments, the hydroxy fatty acid salt can be a salt of ricinoleic acid, such as sodium ricinoleate. Further ingredients can be mixed into the softened gum base. For example, one or more of the following can be added: abrasive, bulking agent, filler, humectant, flavorant, colorant, dispersing agent, softener, plasticizer, preservative, warming agent, cooling agent, tooth whitening agent and sweetener.

In some embodiments, gum pieces can be coated with an aqueous coating composition, which can be applied by any method known in the art. The coating composition can be present in an amount from about 20 to 60 wt.%, specifically 25% to about 35% by weight of the total gum piece, more specifically about 30% by weight of the gum piece.

The outer coating can be hard or crunchy. Typically, the outer coating can include sorbitol, maltitol, xylitol, isomalt, and other crystallizable polyols; sucrose can also be used. Flavorants can also be added to yield unique product characteristics.

The coating, if present, can include several opaque layers, such that the chewing gum composition is not visible through the coating itself, which can optionally be covered with a further one or more transparent layers for aesthetic, textural and protective purposes. The outer coating can also contain small amounts of water and gum arabic. The coating can be further coated with wax. The coating can be applied in a conventional manner by successive applications of a coating solution, with drying in between each coat. As the coating dries it usually becomes opaque and is usually white, though other colorants can be added. A polyol coating can be further coated with wax. The coating can further include colored flakes or speckles.

If the chewing gum composition or product comprises a coating, it is possible that one or more spilanthol-containing components can be dispersed throughout the coating. The coating can be formulated to assist with increasing the thermal stability of the gum piece and preventing leaking of a liquid fill if the gum product is a center-filled gum. In some embodiments, the coating can include a gelatin composition. The gelatin composition can be added as a 40 wt.% solution and can be present in the coating composition from about 5 wt% to about 10 wt.% of the coating composition, and more specifically about 7 wt.% to about 8 wt.%. The gel strength of the gelatin can be from about 130 bloom to about 250 bloom.

Additives, such as physiological coolants, throat- soothing agents, spices, warming agents, oral care agents, medicaments, vitamins, caffeine, and conventional additives can be included in any or all portions of the chewing gum composition. Such components can be used in amounts sufficient to achieve their intended effects.

A wide variety of one or more conventional additives can be used with the chewing gum product composition, including sweeteners, high intensity sweeteners, flavor modulators or potentiators, flavorants, coloring agents, medicaments, oral care agents, throat care agents, breath fresheners, mineral adjuvants, bulking agents, acidulants, buffering agents, sensates (e.g., warming agents, coolants, tingling agents, effervescent agents), thickeners, mouth moisteners, flavor enhancing composition, antioxidants (e.g., butylated hydroxytoluene (BHT), butylated hydroxyanisole (BHA), or propyl gallate), preservatives, and the like. Some of these additives can serve more than one purpose. For example, a sweetener, e.g., sucrose, sorbitol or other sugar alcohol, or combinations of the foregoing sweeteners, can also function as a bulking agent. A combination comprising at least one of the foregoing additives are often used.

A sugar sweetening agent can comprise sucrose, dextrose, maltose, dextrin, xylose, ribose, glucose, mannose, galactose, fructose, lactose, invert sugar, fructo-oligosaccharide syrups, partially hydrolyzed starch, corn syrup solids, high fructose corn syrup, and the like, or a combination comprising at least one of the foregoing sugar sweetening agents.

Menthol is present in the chewing gum product composition in an amount of 0.05 to 1.0 wt.%, specifically 0.025 to 0.15 wt.% menthol, specifically 0.05 to 0.10 wt.%, more specifically 0.040 to 0.08 wt.%, by weight of the chewing gum product composition. The menthol can be added as substantially pure crystals or can be added to the chewing gum product composition in the form of peppermint oil or the like to create "cooling." Peppermint oil generally comprises about 45-55 wt.% menthol, about 20-25 wt.% menthone, about 5 wt.% menthyl acetate, and about 5 wt.% eucalyptol by weight. Other constituents may be present. Peppermint oil is even used in non-peppermint products, such as spearmint or wintergreen flavored products, in order to create this desired cooling effect.

In addition to menthol, the cooling composition comprises one or more physiological cooling agents. The term "physiological cooling agent," in the context of this description, does not include traditional cooling agents that are also flavor-derivatives such as menthol or menthone. Preferred physiological cooling agents do not have a perceptible flavor of their own, but are simply used to provide a cooling effect.

While many physiological cooling agents are known for use in chewing gum composition, the present chewing gum composition comprise physiological cooling agents comprising acyclic tertiary and secondary carboxylamides, cyclic carboxylamides, menthyl esters, or a combination comprising at least one of the foregoing physiological cooling compounds. U.S. Patent Nos. 4,060,091; 4,190,643 and 4,136,163, all assigned to Wilkinson Sword, describe acyclic carboxamides and substituted cyclohexane carboxamides, including substituted p-menthane carboxamides (PMC), especially N-ethyl-p-menthane-3-carboxamide (called WS-3); U.S. Patent Nos. 4,296,255; 4,230,688; and 4,153,679 describe acyclic carboxamides (AC), all also assigned to Wilkinson Sword, especially N-2,3-trimethyl-2-isopropyl butanamide (called WS-23).

The carboxamides in U.S. Pat. No. 4,136,163 are N-substituted-p-menthane-3-carboxamides. The compound N-ethyl-p-menthane-3-carboxamide, commercially available as WS-3 from Wilkinson Sword, is preferred herein. The carboxamides of U.S. Pat. No. 4,230,688 are certain acyclic tertiary and secondary carboxamides, of which N,2,3-trimethyl-2-isopropyl butanamide, commercially available as WS-23 from Wilkinson Sword, is one preferred cooling agent for use herein. Other preferred acyclic carboxamides include acyclic tertiary and secondary carboxamides including the compounds commercially known as Ice 6000, 10000, and 11000. Other cooling compounds include WS-14, N-ethyl-p-menthane-3-carboxamide (WS-3), ethyl 3-(p-menthane-3-carboxamido)acetate (WS-5), N-ethyl-2-isopropyl-5-methylcyclohexanecarboxamide, and the like. U.S. Patent No. 4,150,052 discloses the use of N-ethyl p-menthane-3-carboxamide for its physiological cooling action on the skin.

"Menthyl ester" means a class of compounds such as those described in, for instance, U.S. Patent No. 3,111,127, U.S. Pat. No. 6,365,215 and U.S. Pat. No. 6,884,906, including monomenthyl succinate, dimenthyl succinate, monomenthyl α,α-dimethyl succinate and monomenthyl 2-methylmaleatementhyl glutarate, FEMA 4006. Methyl ester is also intended to include derivatives thereof, such as, for example, the menthyl half acid ester derivatives set forth in U.S. Pat. No. 6,884,906. The term is also intended to embrace the alkali metal salts and alkaline earth metal salts of the menthyl compounds such as monomenthyl succinate and monomenthyl glutarate. Menthyl esters also include menthyl acetate, 1-menthyl acetate, d,1-menthyl acetate, homomenthyl acetate, menthyl lactate, and 1-menthyl lactate. U.S. Pat. Nos. 5,725,865 and 5,843,466 disclose the use of mono menthyl succinate for its physiological cooling action.

The term "menthyl glutarate" comprises monomenthyl monomenthyl 2-methylmaleatementhyl glutarate (FEMA 4006), monomenthyl glutarate ester, dimenthyl glutarate ester, a menthyl half acid ester derivative, or a combination comprising at least one of the foregoing menthyl glutarates.

The menthyl ester, L-monomenthyl glutarate, has been registered as a GRAS flavoring substance, FEMA No. 4006 and, in Smith et al., "GRAS Flavoring Substances 20", Food Technology, Vol. 55, No. 12, December 2001 at page 53, for use in chewing gum composition among other products, including hard candy.

L-monomenthyl glutarate has the chemical name (L)-monomenthane-3-yl glutarate and is sometimes known as pentadienoic acid or mono[5 ethyl-2-1(1-methylethyl)cyclohexyl]ester, [1L]. Monomethyl glutarate, which has the chemical formula C₁₅H₂₆O₄, can be located by JECFA Number 1414 and CAS number 220621-22-7. It is present as a clear viscous fluid having a minty, menthol-like aroma.

A number of the mono menthyl half acid ester derivatives can also be used such as (i) L-menthyl hydrogen adipate (n=3); (ii) L-menthyl hydrogen pimelate (n=4); and (iii) L-menthyl hydrogen suberate (n=5) as disclosed by Rule et al., "Optical Activity and the Polarity of Substituent Groups Part VIII. Growing-chain Effects and the ortho-Effect in Benzoic Esters", J. Chem. Soc. 1928 (Part 1), pp. 1347-1361.

For example, the cooling agent system can comprise one or more physiological cooling compounds comprising menthyl glutarate, menthyl succinate, N,2,3-trimethyl-2-isopropyl butanamide (WS-23), N-ethyl p-menthane-3-carboxamide (WS-3), N-ethyl-2,2-diiisopropylbutamide (ICE 10000® cooling agent), or a combination comprising at least one of the foregoing cooling compounds. Preferably, the cooling agent system comprises a combination of menthyl glutarate and N,2,3-trimethyl-2-isopropyl butanamide. More preferably, the cooling agent system comprises a combination of menthyl glutarate, N,2,3-trimethyl-2-isopropyl butanamide, and N-ethyl p-menthane-3-carboxamide. Most preferably, the cooling agent system consists essentially of menthol and the latter three physiological cooling agents.

In one embodiment, the composition contains one or more first physiological cooling agents comprising one or more menthyl esters and one or more second physiological cooling agents comprising N-ethyl-p-menthane-3-carboxamide, N-ethyl-2,2-diisopropylbutanamide, N,2,3-trimethyl-2-isopropyl butanamide, or a combination comprising at least one of the foregoing carboxylamides, wherein the chewing gum composition, or a chewing gum product piece, or region consisting of the composition, comprises about 0.01 to about 0.10 wt.% of each of the one or more first physiological cooling agents and about 0.01 to about 0.10 wt.% percent of each of the second physiological cooling agents, based on the total weight of the chewing gum composition. In one specific embodiment, the cooling agent composition in the chewing gum composition comprises from about 50 to about 80 wt.% of menthyl glutarate, about 5 to 15 wt.% of WS-3, about 5 to 15 wt.% of WS-23, and about 2 to 20 wt.% of menthyl succinate, not including menthol.

In one embodiment, the physiological cooling agents consist essentially of one or two menthyl esters and, in addition, N-ethyl-p-menthane-3-carboxamide and trimethyl isopropyl butanamide.

All cooling agents, including menthol and physiological cooling agents, can be present in total amounts of about 0.05 wt.% to about 0.5 wt.% by weight of the mouth-moistening chewing gum composition. In some embodiments, cooling agents can be present in total amounts of about 0.10 wt.% to about 0.30 wt.% by weight. In some embodiments, it can be desirable to provide a chewing gum product that is low in menthol. Since menthol can cause a sensation of astringency or puckering upon consumption, particularly at high levels, creating a negative impact on hydration, some embodiments can be "low in menthol" (not more than about 0.10 wt.% menthol by weight of the chewing gum composition, more specifically not more than about 0.05 wt.% menthol by weight).

In one embodiment, the cooling agent system or composition can be prepared by first providing menthyl glutarate, or at least two menthyl esters in some embodiments, in liquid form. Because menthyl glutarate has a low melting point, it is a liquid at room temperature (about 25° C). At least one cooling agent selected from N-ethyl-p-menthane-3-carboxamide, trimethyl isopropyl butanamide, and combinations thereof can be added to the liquid menthyl glutarate. N-ethyl-p-menthane-3-carboxamide and trimethyl isopropyl butanamide are both solids at room temperature. Solid cooling agents are typically dissolved in a solvent prior to incorporation into chewing gum composition. This makes them more easily incorporated into such products. Because menthyl glutarate is a liquid, the solid cooling agents can be dissolved or suspended directly in the liquid menthyl glutarate to form the liquid cooling composition. This can be done at room temperature in the absence of added heat. This composition can be formed as a premix at room temperature. Accordingly, an additional solvent is not needed to dissolve the solid cooling agents.

In some embodiments, it can be desirable to heat the combination of cooling agents to melt the ones that are solids at room temperature. In particular, although menthyl glutarate is a liquid, many cooling agents are solids at room temperature. After being melted, such cooling agents will solidify and recrystallize upon cooling. Such recrystallization can make it difficult to add these cooling agents into chewing gum composition. For instance, the following cooling agents have melting points near or above room temperature: menthol (43°C); WS-3 (88°C); WS-23 (62-64°C); menthyl lactate (40-42°C); menthyl succinate (59-61°C); and menthyl acetate ester (23-24°C). Once such additional cooling agents are added to menthyl glutarate, for example, to provide at least two menthyl esters, it can be desirable to heat the composition to melt the cooling agents that are solids. For instance, in some embodiments, the composition can be heated to melt WS-3, WS-23 and/or menthol. The composition can be heated to a temperature of at least about 65°C. The liquid composition then can be cooled to less than about 30°C, more specifically about 25°C, while maintaining the composition in a liquid state. This provides a liquid cooling composition that is stable for a period of time at room temperature without recrystallization of the cooling agents that are typically solids at room temperature.

The cooling composition can be blended with the other components of the chewing gum composition, which blend of components imparts a perception of mouth-moistening. The term "blend" refers to a mix, or combination of components, into an integrated whole. In some instances, the separate components or line of demarcation cannot be distinguished. Some embodiments further can include a homogenous blend of the components. The term "homogenous" refers to a uniform blend of the components.

The sweetening composition can include one or more sugar sweetening agents, one or more high intensity sweetening agents, and one or more reduced-sweetness sweetening agents, or a combination comprising at least one of the foregoing sweetening agents. In some embodiments, the sweetening composition can include a blend or pre-mix of a sugar sweetener and one or more sweetening reducing agents. The reduced-sweetness sweetening agent substantially lowers the level of sweetness as compared to sugar. For example, the reduced-sweetness sweetening agent can be a component that replaces some or all of the sugar and effectively reduces the overall sweetness perception of sugar. Reduced levels of sweetness contribute to the sensation of mouth-moistening perceived by the individual user.

In other embodiments, the sweetening composition can include a reduced-sweetness sweetening agent alone or in combination with a high intensity sweetening agent. In some sugarless, or sugar-free, embodiments, the sweetening composition can include at least one non-sucrose saccharide. Some embodiments can include a plurality of non-sucrose saccharides. For example, the sweetening composition can include reduced-sweetness sweetening agents comprising polyols, sugar alcohols, or a combination comprising at least one of the foregoing sweetening agents. Suitable polyols include, but are not limited to, sorbitol, mannitol, maltitol, xylitol, isomalt, polydextrose, erythritol, lactitol, galactitol, stevia, hydrogenated starch hydrolysates, hydrogenated isomaltulose (isomalt), polyglycitol syrups, and combinations thereof. In such embodiments, the sweetening composition desirably has a sweetness intensity less than the sweetness intensity of sucrose.

The sweetening composition can also comprise a non-sweetener that serves to reduce the sweetness perception of the sweetening composition below the level of a sugar sweetener. Such sweetness reducing agents include, but are not limited to, sweetness inhibiting agents or sweetness receptor blockers, proteins, glycoproteins, oligoproteins, and mixtures thereof.

Non-sucrose saccharides can also be employed in the chewing gum composition to reduce sweetness. In some sugarless embodiments, as described above, the sweetening composition can include at least one non-sucrose saccharide, without sugar. Non-sucrose saccharides include mono-saccharides, di-saccharides, oligo-saccharides and polysaccharides. Suitable examples of non-sucrose saccharides include, but are not limited to: starches, both modified and natural, and starch fractions including amylose and amylopectin; pectins, such as low and high molecular weight methoxy pectins; alginates, such as sodium and potassium; natural and synthetic gums, such as gum arabic, gellan gum, welan gum, gum tragacanth, xanthan gum, guar gum, and locust bean gum; celluloses, such as carboxymethyl cellulose, hydroxypropyl cellulose, hydroxymethyl cellulose, hydroxybutyl carboxymethyl cellulose, hydroxypropylethyl cellulose and methylethyl cellulose; carrageenans, such as alpha-, gamma-, iota-, kappa-and lambda carrageenans; polyols; and combinations thereof.

The chewing gum composition can optionally further comprise sweetness inhibiting agents or receptor blockers, which generally act to inhibit the sweet taste perceived in compositions into which they are incorporated. Suitable sweetness inhibitors include, but are not limited to: ethers or thioethers of acetic acid derivatives, as disclosed in U.S. Pat. No. 4,567,053; salts of substituted benzoylalkyl carboxylic acids, as disclosed in U.S. Pat. No. 4,544,565; 3-aminobenzenesulfonic acid and derivatives thereof, as disclosed in U.S. Pat. No. 4,642,240; substituted phenylalkyl carboxylic acid salts and substituted phenyl ketoalkyl carboxylic acid salts, as disclosed in U.S. Pat. No. 4,567,053; substituted benzoyloxy acetic and 2-propionic acid salt derivatives, as disclosed in United Kingdom Patent Application No. 2,180,534; 2-p-methoxyphenoxypropionic acid (commercially available as LACTISOLE from Tate & Lyle); p-methoxybenzylacetic acid; and mixtures thereof. These sweetness inhibitors are described in more detail in the following U.S. patents: U.S. Pat. No. 5,021,249 to Bunick et al.; U.S. Pat. No. 4,567, 053 to Lindley; U.S. Pat. No. 4,544,565 to Barnett; and U.S. Pat. No. 4, 642,240 to Barnett et al.

The chewing gum product composition optionally can further comprise sweetness reducing proteins that can be selected from a wide variety of materials. Suitable proteins include, for example: gelatin; caseins and caseinates; whey proteins; soy proteins; wheat proteins; corn proteins; rice proteins; barley proteins; egg proteins; muscle proteins; proteins from other legumes and tubers; and combinations thereof. Glycoproteins include, for example, chondroitins, glucosaminoglycans and lectins. Glycolipids also can be employed.

Combinations of various reduced-sweetness sweetening agents, non-sucrose saccharides sweetness inhibiting agents, and sweetness reducing proteins also can be employed in some embodiments.

In some embodiments, the reduced-sweetness sweetening agent may be present in amounts of about 0.01% to about 80% by weight of the chewing gum composition, more specifically in amounts of about 3% to about 55% by weight. The sweetening composition, i.e., the reduced-sweetness sweetening agents in combination with sugar sweeteners in some embodiments, or reduced-sweetness sweetening agents alone in other embodiments, may be present in amounts of about 0.01% to about 99% by weight of the composition.

Suitable sugar sweeteners for use in the compositions generally include mono-saccharides, di-saccharides and poly-saccharides such as, but not limited to, sucrose (sugar), dextrose, maltose, dextrin, xylose, ribose, glucose, mannose, galactose, fructose (levulose), lactose, invert sugar, fructo oligo saccharide syrups, partially hydrolyzed starch, corn syrup solids, and mixtures thereof.

In some embodiments, high intensity sweeteners also can be included in the chewing gum compositions as a complete or partial replacement of sugar sweetener. A high intensity sweetener as used herein means an agent having sweetness at least 100 times, specifically at least 500 times, and more specifically at least 1,000 times, that of a sucrose sugar on a per-weight basis. The high intensity sweetener can be selected from a wide range of materials, including water-soluble sweeteners, water-soluble artificial sweeteners, water-soluble sweeteners derived from naturally occurring water-soluble sweeteners, dipeptide based sweeteners, and protein based sweeteners. Combinations comprising one or more sweeteners or one or more of the foregoing types of sweeteners can be used.

Without being limited to particular high intensity sweeteners, representative categories and examples include:
(a) water-soluble sugar alcohols such as sorbitol, mannitol, maltitol, xylitol, erythritol and L-aminodicarboxylic acid aminoalkenoic acid ester amides, such as those disclosed in U.S. Pat. No. 4,619,834, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame K), the free acid form of saccharin, and mixtures thereof;
(c) dipeptide based sweeteners, such as L-aspartic acid derived sweeteners, such as L-aspartyl-L-phenylalanine methyl ester (Aspartame) and materials described in U.S. Pat. No. 3,492,131, L-alphaaspartyl-N-(2,2,4,4-tetramethyl-3-thietanyl)-D-alaninamide hydrate (Alitame), N-[N-(3,3-dimethylbutyl)-L-aspartyl]-L-phenylalanine 1-methyl ester (Neotame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(1-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D-fructo furanoside, or 4,1',6'-trichloro-4,1',6'-trideoxygalactosucrose; 4, 6-dichloro-4,6-dideoxy-alpha-D-galactopyranosyl-6-chloro-6-deoxy-beta-D-fructofuranoside, or 4,6,6'-trichloro-4,6,6'-trideoxygalactosucrose; 6,1', 6'-trichloro-6,1',6'-trideoxysucrose; 4,6-dichloro-4,6-dideoxy-alpha-D-galacto-pyranosyl-1,6-dichloro-1,6-dideoxy-beta -D-fructofuranoside, or 4, 6,1',6'-tetrachloro4,6,1',6'-tetradeoxygalacto-sucrose; and 4,6,1',6'-tetradeoxy-sucrose, and mixtures thereof;
(e) protein based sweeteners such as thaumatococcus danielli (Thaumatin I and II) and talin;
(f) the sweetener monatin (2-hydroxy-2-(indol-3-ylmethyl)-4-aminoglutaric acid) and its derivatives; and
(g) the sweeteners rebaudioside A, rebaudioside B, rebaudioside C, rebaudioside D, rebaudioside E, rebaudioside F, dulcoside A, dulcoside B, rubusoside, stevia, stevioside, mogroside IV, mogroside V, Luo Han Quo sweetener (sometimes also referred to as "Lo han kuo "or "Lo han quo"), siamenoside, monatin and its salts (monatin SS, RR, RS, SR), glycyrrhizic acid and its salts, hemandulcin, phyllodulcin, glycyphyllin, dihydroflavenol, dihydrochalcones, phloridzin, trilobatin, baiyunoside, osladin, polypodoside A, pterocaryoside A, pterocaryoside B, mukurozioside, phlomisoside I, periandrin I, abrusoside A, and cyclocarioside I. Such high intensity sweeteners can be used at any suitable purity level. Additionally, the purification of rebaudioside A by crystallization can result in the formation of at least three different polymorphs: a rebaudioside A hydrate; an anhydrous rebaudioside A; and a rebaudioside A solvate. In addition to the at least three polymorph forms of rebaudioside A, the purification of rebaudioside A may result in the formation of an amorphous form of rebaudioside A.

Preferably, the high intensity sweetening agent comprises the potassium salt of 3,4-dihydro-6-methyl-1,2,3-oxathiazine-4-one-2,2-dioxide, L-aspartyl-L-phenylalanine methyl ester, L-alpha-aspartyl-N-(2,2,4,4-tetramethyl-3-thietanyl)-D-alaninamide hydrate, N-[N-(3,3-dimethylbutyl)-L-aspartyl]-L-phenylalanine 1-methyl ester, chlorinated derivatives of sucrose, thaumatin, monatin, mogrosides, or a combination comprising at least one of the foregoing high intensity sweetening agents. More preferably the chewing gum composition comprises a high intensity sweetening agent comprising sucralose and acesulfame K.

The intense sweetening agents can be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

In general, an effective amount of intense sweetener can be utilized to provide the level of sweetness desired, and this amount can vary with the sweetener selected. The intense sweetener can be present in amounts from about 0.001% to about 5%, by weight of the chewing gum composition, depending upon the sweetener or combination of sweeteners used. The exact range of amounts for each type of sweetener can be selected by those skilled in the art.

As indicated above, the chewing gum composition can further comprise a food-grade acid composition. The term "food-grade acid," as used herein, encompasses any acid that is acceptable for use in edible compositions. Such a blend of components can be used to provide low sweetness and slight sourness, which together can also contribute to a sensory perception of mouth moistening.

In one embodiment, the food-grade acid composition comprises malic acid. The food-grade acid composition can further comprise acetic acid; adipic acid; ascorbic acid; butyric acid; citric acid; formic acid; fumaric acid; glyconic acid; lactic acid; phosphoric acid; oxalic acid; succinic acid; tartaric acid; or a combination comprising at least one of the foregoing acids. Such food-grade acids can be used alone or in combination with malic acid. In one specific embodiment the food-grade acid composition comprising a combination of malic acid and citric acid.

Food-grade acids stimulate the salivary glands to produce more saliva. The food-grade acid composition can include one or more acids having a pKa of about 1 to about 5.

In general, the food-grade acid composition is present in amounts of about 0.01% to about 10% by weight of the chewing gum composition. In some embodiments, the food-grade acid composition is present in amounts of about 0.05% to about 5% by weight, more specifically about 0.1 % to about 1% by weight. Accordingly, malic acid, alone or in combination with other food-grade acids, can be present in amounts of about 0.01 % to about 10% by weight of the chewing gum composition, more specifically about 0.05% to about 1.0 wt.% by weight, and even more specifically about 0.2% to about 0.5% by weight.

In some embodiments, the chewing gum composition for the product can also comprise one or more flavor enhancing agents (also referred to as flavorants or flavor). Flavor enhancing agents can include flavorants, the taste potentiators described below, and combinations thereof. Suitable flavorants include artificial or natural flavors known in the art, for example, synthetic flavor oils, natural flavoring aromatics and/or oils, oleoresins, extracts derived from plants, leaves, flowers, fruits, or the like, or combinations comprising at least one of the foregoing flavorants. Nonlimiting representative flavors include oils such as spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, cassia oil, citrus oils including lemon, orange, lime, grapefruit, vanilla, fruit essences, including apple, pear, peach, grape, strawberry, raspberry, blackberry, cherry, plum, pineapple, apricot, banana, melon, tropical fruit, mango, mangosteen, pomegranate, papaya, and honey lemon essences, and the like, or a combination comprising at least one of the foregoing flavorants. Specific flavorants are mints such as peppermint, spearmint, artificial vanilla, cinnamon derivatives, and various fruit flavors.

Other types of flavorants can include various aldehydes and esters such as cinnamyl acetate, cinnamaldehyde, citral diethylacetal, dihydrocarvyl acetate, eugenyl formate, p-methylamisol, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2-hexenal (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin). Flavorants can be used in liquid or solid form. With respect to the solid (dry) form, suitable drying means such as spray drying the oil can be used.

The chewing gum product can also be a candy whose center is filled with a hard, soft, or particulate material. The filling inside a chewing gum of the present composition or in a different region of a multi-layered product containing a candy of the present composition, includes, but is not limited to, a different chewing gum composition, chocolate, mint, chewy candy, boiled candies, jelly, fudge, caramel, toffee, taffy, gelatin or gum candy nougat, fondant, powder, or combinations of one or more of these, or edible compositions incorporating one or more of these.

As used herein, the term "center-fill" refers to the innermost region of a chewing gum product. The term "center-fill" does not necessarily imply symmetry of a chewing gum product, only that the "center-fill" is within another region of the product. In some embodiments, the center-fill may be substantially symmetric and in others, the center-fill may not be symmetric of the chewing gum piece. A center-fill may include solid, liquid, gas and mixtures thereof. The term "liquid" in the context of a center-fill includes fluid materials as well as semi-solid or gel materials. The center-fill can be aqueous, non-aqueous, or an emulsion.

The center-fill may be sugar or sugar-free and it may contain fat or be fat-free. Additionally, the center-fill may contain vegetable-based, dairy-based or fruit-based materials such as, but not limited to, fruit juices, fruit concentrates, fruit purees, dried fruit materials, and the like. Further, in some embodiments, the center-fill component may include one or more sweeteners such as those discussed above. The center-fill may also include one or more hydrocolloid materials. Emulsifiers such as glycerides can also be incorporated into the center-fill composition.

In a piece of chewing gum product, the spilanthol-containing composition in one region can be separated by means of one or more coatings from a different composition in another region of the product. As used herein, the terms "coating" or "coating region" are used to refer to a region of a chewing gum product that at least partially surrounds another region of a chewing gum product, which may be referred to as a chewing gum foundation for the coating. In some embodiments, the coating may be amorphous or crystalline and it may be non-particulate or particulate.

In some embodiments, a non-particulate coating may prevent moisture migration between regions of a chewing gum product, for example, between a soft center-fill and a chewing gum casing. A non-particulate coating may include a crystalline form of a sugar saccharide or polyol saccharide. In some embodiments, a non-particulate coating is formed when sugar saccharides or polyol saccharides in a chewing gum piece to be coated crystallize at the surface of the chewing gum foundation. A non-particulate coating may include acids, colors, and flavors. In some embodiments, a coating composition may be in particulate form, crystalline form, or amorphous form, comprising any conventional ingredient such as, but not limited to, salts, sweeteners, flavors, sensates, functional ingredients, and food acids. Particulate coating regions are also known as sanding regions or dusting regions.

In some embodiments, the center-fill region can include two or more center-fill compositions. The two or more center-fill compositions can be the same or different forms. For example, some embodiments can contain a mixture of two or more distinct liquids, which may or may not be miscible. Similarly, some embodiments can contain two or more distinct solids, semi-solids, or gasses in the center-fill region. Mixtures of different center-fill forms also can be included in some embodiments. For example, a liquid and a solid can be included in the center-fill region. The two or more liquids, solids, semi-solids, and/or gasses employed in the center-fill region can be included in the same or different amounts and can have similar or distinct characteristics. More specifically, in some embodiments, the two or more center-fill compositions can differ in a variety of characteristics, such as, viscosity, color, flavor, taste, texture, sensation, ingredient gelatin beads, and the like.

Some center-fill embodiments optionally can include a coating region that at least partially surrounds the center-filled region. The coating can be any conventional sugar or sugarless coating, which forms an exterior surface on the center-fill product. A variety of coating processes or mechanisms is known for forming such coatings.

For additional disclosure of various center-fill products and methods of making center-fill products, see patent application Pub. No. US 2006/0280834 A1 to Jani et al. Further details regarding the preparation of chewing gum product compositions can be found in Skuse's Complete Confectioner (13th Edition) (1957) including pp. 41-71, 133-144, and 255-262; and Sugar Chewing gum product Manufacture (2nd Edition) (1995), E. B. Jackson, Editor, pp. 129-168, 169-188, 189-216, 218-234, and 236-258.

In addition to the above-mentioned ingredients, a chewing gum composition can contain other additives according to desirability. One or more conventional additives can be used with a chewing gum product composition, including bulking agents, coloring agents, acidulants, buffering agents, antioxidants, preservatives, nutraceuticals, medicaments, and the like. Some of these additives can serve more than one purpose. For example, a sweetener, e.g., sucrose, sorbitol, or other sugar alcohol, or combinations of the foregoing sweeteners, can also function as a bulking agent. A combination comprising at least one of the foregoing additives is often used.

Bulking agents can include sweetening agents listed above and other suitable agents such as minerals. Specific examples can include monosaccharides, disaccharides, polysaccharides, sugar alcohols, polydextrose, and maltodextrins.

Coloring agents can include pigments, which can be incorporated in amounts up to about 6% by weight of the composition. For example, titanium dioxide can be incorporated in amounts up to about 2%, and preferably less than about 1%, by weight of the composition. The colorants can also include natural food colors and dyes suitable for food, drug, and cosmetic applications. These colorants are known as FD&C dyes and lakes. The materials acceptable for the foregoing uses are preferably water-soluble. Illustrative nonlimiting examples include the indigoid dye known as FD&C Blue No. 2, which is the disodium salt of 5,5-indigotindisulfonic acid. Similarly, the dye known as FD&C Green No. 1 comprises a triphenylmethane dye and is the monosodium salt of 4-[4-(N-ethyl-p-sulfoniumbenzylamino)diphenylmethylene]-[1-(N-ethyl-N-p-sulfoniumbenzyl)-delta-2,5-cyclohexadieneimine]. A full recitation of all FD&C colorants and their corresponding chemical structures can be found in the Kirk-Othmer Encyclopedia of Chemical Technology, 3rd Edition, in volume 5 at pages 857-884.

Taste potentiators are substances capable of reducing or eliminating undesirable tastes in edible substances. Taste potentiators can also serve to enhance desirable tastes in edible substances such as sweetness potentiators that increase sweetness intensity. In the context of cooling agents, taste potentiators can be effective to reduce or eliminate bitterness, undesired mintiness, or other undesired taste. The taste potentiator compositions can have controlled-release properties. The taste potentiator can work synergistically with the cooling agent to enhance the perception of the cooling agent. In some embodiments, delivery of a sweetener in combination with a taste potentiator can enhance the sweet taste upon consumption of the composition. The incorporation of the potentiator, therefore, can allow for reduced amounts of cooling agent and/or sweetener without compromising the levels of cooling and sweetness provided by the composition.

Any of a variety of substances that function as taste potentiators can be employed in the compositions described herein. For instance, suitable taste potentiators include water-soluble taste potentiators, such as, but not limited to, neohesperidin dihydrochalcone, chlorogenic acid, alapyridaine, cynarin, miraculin, glupyridaine, pyridinium-betain compounds, glutamates, such as monosodium glutamate and monopotassium glutamate, neotame, thaumatin, tagatose, trehalose, salts, such as sodium chloride, monoammonium glycyrrhizinate, vanilla extract (in ethyl alcohol), water-soluble sugar acids, potassium chloride, sodium acid sulfate, water-soluble hydrolyzed vegetable proteins, water-soluble hydrolyzed animal proteins, water-soluble yeast extracts, adenosine monophosphate (AMP), glutathione, water-soluble nucleotides, such as inosine monophosphate, disodium inosinate, xanthosine monophosphate, guanylate monophosphate, alapyridaine (N-(1-carboxyethyl)-6-(hydroxymethyl)pyridinium-3-ol inner salt, sugar beet extract (alcoholic extract), sugarcane leaf essence (alcoholic extract), curculin, strogin, mabinlin, gymnemic acid, 2-hydroxybenzoic acid (2-HB), 3-hydroxybenzoic acid (3-HB), 4-hydroxybenzoic acid (4-HB), 2,3-dihydroxybenzoic acid (2,3-DHB), 2,4-dihydroxybenzoic acid (2,4-DHB), 2,5-dihydroxybenzoic acid (2,5-DHB), 2,6-dihydroxybenzoic acid (2,6-DHB), 3,4-dihydroxybenzoic acid (3,4-DHB), 3,5-dihydroxybenzoic acid (3,5-DHB), 2,3,4-trihydroxybenzoic acid (2,3,4-THB), 2,4,6-trihydroxybenzoic acid (2,4,6-THB), 3,4,5-trihydroxybenzoic acid (3,4,5-THB), 4-hydroxyphenylacetic acid, 2-hydroxyisocaproic acid, 3-hydroxycinnamic acid, 3-aminobenzoic acid, 4-aminobenzoic acid, 4-methoxysalicylic acid and combinations thereof.

Other suitable taste potentiators are substantially or completely insoluble in water, such as, but not limited to, citrus aurantium, vanilla oleoresin, water insoluble sugar acids, water insoluble hydrolyzed vegetable proteins, water insoluble hydrolyzed animal proteins, water insoluble yeast extracts, insoluble nucleotides, sugarcane leaf essence, and combinations thereof.

Some other suitable taste potentiators include substances that are slightly soluble in water, such as, but not limited to, maltol, ethyl maltol, vanillin, slightly water-soluble sugar acids, slightly water-soluble hydrolyzed vegetable proteins, slightly water-soluble hydrolyzed animal proteins, slightly water-soluble yeast extracts, slightly water-soluble nucleotides, and combinations thereof.

As mentioned above, sweetener potentiators, which are a type of taste potentiator, enhance the taste of sweetness. Exemplary sweetener potentiators include, but are not limited to, monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, sugar beet extract, neotame, thaumatin, neohesperidin dihydrochalcone, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and TIRs, 2-hydroxybenzoic acid (2-HB), 3-hydroxybenzoic acid (3-HB), 4-hydroxybenzoic acid (4-HB), 2,3-dihydroxybenzoic acid (2,3-DHB), 2,4-dihydroxybenzoic acid (2,4-DHB), 2,5-dihydroxybenzoic acid (2,5-DHB), 2,6-dihydroxybenzoic acid (2,6-DHB), 3,4-dihydroxybenzoic acid (3,4-DHB), 3,5-dihydroxybenzoic acid (3,5-DHB), 2,3,4-trihydroxybenzoic acid (2,3,4-THB), 2,4,6-trihydroxybenzoic acid (2,4,6-THB), 3,4,5-trihydroxybenzoic acid (3,4,5-THB), 4-hydroxyphenylacetic acid, 2-hydroxyisocaproic acid, 3-hydroxycinnamic acid, 3-aminobenzoic acid, 4-aminobenzoic acid, 4-methoxysalicylic acid, and combinations thereof.

Additional taste potentiators for the enhancement of salt taste include acidic peptides, such as those disclosed in U.S. Patent No. 6,974,597 to Ohta et al. Perillartine also can be added as described in U.S. Patent No. 6,159,509 to Johnson et al. Still additional taste potentiators include those described, for example, in U.S. Patent Nos. 5,631,038 and 6,008,250 to Kurtz et al. In some embodiments, the taste potentiator can comprise 3-hydroxybenzoic acid and a dihydroxybenzoic acid selected from the group consisting of 2,4-dihydroxybenzoic acid, 3,4-dihydroxybenzoic acid, and combinations thereof. Confectionery salts such as sodium, potassium salts, calcium, magnesium, and ammonium salts, can be substituted for the free acids in these potentiator combinations.

Any of the above-listed taste potentiators can be used alone or in combination. Some embodiments, for instance, can include two or more taste potentiators that act synergistically with one another. For instance, in some embodiments, a sweetener potentiator composition can be provided, which includes two or more sweetener potentiators that act synergistically with one another. The sweetener potentiator composition can enhance the sweetness of products into which it is incorporated by reducing the amount of sucrose needed to provide a sweetness intensity equivalent to sucrose. The sweetness enhancing effect of the combination of sweetener potentiators can be greater than the effect of either compound used individually.

Warming agents can include a wide variety of compounds known to provide the sensory signal of warming to the user. These compounds offer the perceived sensation of warmth, particularly in the oral cavity, and often enhance the perception of flavors, sweeteners, and other organoleptic components. Suitable warming agents include vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyl ether, vanillyl alcohol n-hexyl ether, vanillyl alcohol methyl ether, vanillyl alcohol ethyl ether, gingerol, shogaol, paradol, zingerone, capsaicin, dihydrocapsaicin, nordihydrocapsaicin, homocapsaicin, homodihydrocapsaicin, ethanol, isopropyl alcohol, isoamyl alcohol, benzyl alcohol, glycerine, and a combination comprising at least one of the foregoing. In some embodiments, a warming agent and a cooling agent can be incorporated into spatially distinct regions of the chewing gum product. Specific warming agents, for advantageous use with spilanthol, are capsicum, vanillyidene acetone, vanillyl butyl ether, vanillyl ethyl ether, zingerone (ginger) and piperine.

The combination of one of these warming agents and spilanthol, in compositions according to the present invention, can increase tingle or add a warm prickling sensation, which may be advantageous in some embodiments. Specific warming agents, for advantageous use with spilanthol, are capsicum, vanillyidene acetone, vanillyl butyl ether, vanillyl ethyl ether, zingerone (ginger) and piperine.

Breath fresheners can include zinc citrate, zinc acetate, zinc fluoride, zinc ammonium sulfate, zinc bromide, zinc iodide, zinc chloride, zinc nitrate, zinc fluorosilicate, zinc gluconate, zinc tartarate, zinc succinate, zinc formate, zinc chromate, zinc phenol sulfonate, zinc dithionate, zinc sulfate, silver nitrate, zinc salicylate, zinc glycerophosphate, copper nitrate, chlorophyll, copper chlorophyll, chlorophyllin, hydrogenated cottonseed oil, chlorine dioxide, beta cyclodextrin, zeolite, silica-based material, carbon-based material, enzymes such as laccase, or a combination comprising at least one of the foregoing. Breath fresheners can include essential oils as well as various aldehydes and alcohols. Essential oils used as breath fresheners can include oils of spearmint, peppermint, wintergreen, sassafras, chlorophyll, citral, geraniol, cardamom, clove, sage, carvacrol, eucalyptus, cardamom, magnolia bark extract, marjoram, cinnamon, lemon, lime, grapefruit, orange, or a combination comprising at least one of the foregoing. Aldehydes such as cinnamic aldehyde and salicylaldehyde can be used. Additionally, chemicals such as carvone, iso-garrigol, and anethole can function as breath fresheners.

Suitable additional mouth moisteners can include hydrocolloid materials that hydrate and can adhere to oral surfaces to provide a sensation of mouth moistening. Hydrocolloid materials can include naturally occurring materials such as plant exudates, seed gums, and seaweed extracts or they can be chemically modified materials such as cellulose, starch, or natural gum derivatives. Furthermore, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, and bacterial gums. Mouth moisteners can include modified natural gums such as propylene glycol alginate, carboxymethyl locust bean gum, low methoxyl pectin, or a combination comprising at least one of the foregoing. Modified celluloses can be included such as microcrystalline cellulose, carboxymethylcellulose (CMC), methylcellulose (MC), hydroxypropylmethylcellulose (HPCM), hydroxypropylcellulose (HPC), or a combination comprising at least one of the foregoing mouth moisteners.

Suitable acidulants can include sodium bicarbonate and carbonate, sodium or potassium phosphate and magnesium oxide, potassium metaphosphate, sodium acetate, or a combination comprising at least one of the foregoing acidulants.

Exemplary buffering agents can include sodium bicarbonate, sodium phosphate, sodium hydroxide, ammonium hydroxide, potassium hydroxide, sodium stannate, triethanolamine, citric acid, hydrochloric acid, sodium citrate, or a combination comprising at least one of the foregoing buffering agents.

Antioxidants can include butylated hydroxytoluene (BHT), butylated hydroxyanisole (BHA), propyl gallate, and combinations thereof.

Suitable nutraceuticals can include herbs and botanicals such as aloe, bilberry, bloodroot, calendula, capsicum, chamomile, cat's claw, echinacea, garlic, ginger, ginkgo, goldenseal, various ginseng, green tea, guarana, kava kava, lutein, nettle, passionflower, rosemary, saw palmetto, St. John's wort, thyme, and valerian. Also included are mineral supplements such as calcium, copper, iodine, iron, magnesium, manganese, molybdenum, phosphorous, zinc, and selenium. Other nutraceuticals can include fructooligosaccharides, glucosamine, grapeseed extract, cola extract, guarana, ephedra, inulin, phytosterols, phytochemicals, catechins, epicatechin, epicatechin gallate, epigallocatechin, epigallocatechin gallate, isoflavones, lecithin, lycopene, oligofructose, polyphenols, flavanoids, flavanols, flavonols, and psyllium as well as weight loss agents such as chromium picolinate and phenylpropanolamine. Exemplary vitamins and co-enzymes include water or fat soluble vitamins such as thiamin, riboflavin, nicotinic acid, pyridoxine, pantothenic acid, biotin, folic acid, flavin, choline, inositol and para-aminobenzoic acid, carnitine, vitamin C, vitamin D and its analogs, vitamin A and the carotenoids, retinoic acid, vitamin E, vitamin K, vitamin B₆, and vitamin B₁₂. Combinations comprising at least one of the foregoing nutraceuticals can be used in compositions according to the invention.

Moreover, the relative amount of each of the above additives of the chewing gum composition will depend on the particular composition and the additive, as well as the desired flavor, and are readily determined by one of ordinary skill in the art without undue experimentation.

Suitable medicaments can include oral care agents, throat care agents, allergy relief agents, and general medical care agents.

Suitable oral care agents can include breath fresheners, tooth whiteners, antimicrobial agents, tooth mineralizers, tooth decay inhibitors, topical anesthetics, mucoprotectants, stain removers, oral cleaning, bleaching agents, desensitizing agents, dental remineralization agents, antibacterial agents, anticaries agents, plaque acid buffering agents, surfactants and anticalculus agents, and a combination comprising at least one of the foregoing. Non-limiting examples of such ingredients can include hydrolytic agents such as proteolytic enzymes, abrasives such as hydrated silica, calcium carbonate, sodium bicarbonate and alumina, other active stain-removing components such as surface-active agents, including anionic surfactants such as sodium stearate, sodium palmitate, sulfated butyl oleate, sodium oleate, salts of fumaric acid, glycerol, hydroxylated lecithin, sodium lauryl sulfate and chelators such as polyphosphates, which are typically employed as tartar control ingredients. Oral care agents can also include tetrasodium pyrophosphate and sodium tri-polyphosphate, sodium bicarbonate, sodium acid pyrophosphate, sodium tripolyphosphate, xylitol, sodium hexametaphosphate, peroxides such as carbamide peroxide, calcium peroxide, magnesium peroxide, sodium peroxide, hydrogen peroxide, and peroxydiphospate.

In addition, oral care ingredients can also include antibacterial agents comprising triclosan, chlorhexidine, zinc citrate, silver nitrate, copper, limonene, and cetyl pyridinium chloride.

Anticaries agents can include fluoride ions, fluorine-providing components (e.g., inorganic fluoride salts), soluble alkali metal salts (e.g., sodium fluoride, potassium fluoride, sodium fluorosilicate, ammonium fluorosilicate, potassium fluoride, sodium monofluorophosphate), and tin fluorides, (e.g., stannous fluoride and stannous chloride, potassium stannous fluoride (SnF₂-KF), sodium hexafluorostannate, stannous chlorofluoride).

One embodiment is a chewing gum composition further comprising a throat care agent or throat-soothing agent. Throat care or throat-soothing agents can include analgesics, antihistamines, anesthetics, demulcents, mucolytics, expectorants, antitussive, and antiseptics. In some embodiments, the throat care agent is honey, propolis, aloe vera, aloe ferox, glycerine, menthol, or a combination comprising at least one of the foregoing.

In accordance with the present invention, to determine the effectiveness of the chewing gum composition at satisfying the desired attributes, taste panels are employed. For example, a number of different chewing gum compositions, each containing different mouth-moistening compositions, can be provided to a particular taste panel. Upon consumption of each chewing gum product, the panel can rate a number of attributes based on predetermined scales, which are commonly accepted in the art.

For instance, the ability of the chewing gum product to reduce or eliminate mouth dryness can be rated on an intensity scale. Intensity scales commonly include a rating scale of 1-5, with 1 being not at all effective and 5 being extremely effective, as described in Morten Meilgaard et al., "Sensory Evaluation Techniques" 247 (3d ed. 1999). In some embodiments, the chewing gum product can have a mouth dryness elimination intensity of at least about 3.0 on such a scale.

The ability of the chewing gum composition to provide refreshment also can be measured by such an intensity scale. In accordance therewith, some embodiments can have a refreshment intensity of at least about 3.0 on such a scale of 1-5.

The ability of the chewing gum composition to provide a mouth-watering effect can be measured on a different type of scale, i.e., a hedonic scale. Hedonic scales measure the level of liking for the specified attribute, as described in "Sensory Evaluation Techniques," referred to above, at pages 242-43. For instance, how much the mouth-watering effect of a chewing gum product is liked or disliked can be rated on a hedonic scale of 1-9, with 1 being disliked extremely and 9 being liked extremely. In some embodiments, the chewing gum product can have a mouth-watering effect of at least about 6 on such a scale.

Other attributes are typically tested as well. One text covering all the basic techniques of sensory testing is *Sensory Evaluation of Food: Principles & Practices,* by Harry T. Lawless and Hildegarde Heymann. Statistics used in sensory evaluation are demonstrated as integrated applications in the context of appropriate sensory methods and are also presented as stand-alone material in appendices. Statistical applications are tailored to common analyses encountered in sensory work, together with instructions on how tests should be conducted.

For example, a panel of respondents can be assembled for sensory evaluation. Attribute terms for evaluation of samples are selected. Normally, ballot development and respondent training are carried out initially. Descriptive terms are developed for major sensory attribute categories. Exemplary attribute qualities include aroma, flavor, texture, aftertaste, sweetness, etc. Attributes are quantified with an intensity scale of from, e.g., 0 to 10; where 0 indicates that the attribute is not detected and 10 indicates the attribute is extremely strong. Overall quality rating can be measured with a scale of from, e.g., 1 to 10 where less than 6 is considered "poor," 6 to 7 is "fair," and 8 to 10 is "good."

Overall quality ratings and quantified intensity ratings can be analyzed with commercially available software programs. Descriptive statistical measures can be calculated for all attributes. Analysis of variance can be performed on each attribute using a randomized block design for balanced data with panelists as repeated measures as described by Ott, "Analysis of variance for some standard experimental designs," pp. 844-856 in An Introduction to Statistical Methods and Data Analysis. Wadsworth Publishing, Belmont, Calif. Where F-test indicates a significant difference between treatment means, Tukey paired comparisons and orthogonal comparisons can be used to determine where the means are different. Significance of differences can be defined as P less than 0.05. Principal components analysis (PCA) can be applied with the factor analysis described by Lawless and Heymann, 1998, pp. 606-608 in Sensory Evaluation of Food: Principles and Practices. Chapman & Hall, New York, 1998. PCA can be applied to the attributes. Attributes can be omitted if the values are consistently low indicating that the attribute is not often present, if the attribute has a high standard deviation or if the attribute is highly correlated to another attribute. Kaiser's criterion can be applied (eigen value greater than 1) to determine the number of final factors from the initial ones as described by Massart et al., "Principal components and factor analysis," pp. 339-369 in Chemometrics: A Textbook. Elsevier, Amsterdam, 1988. To facilitate the interpretation of results, the factors can be orthogonally rotated leading to uncorrelated factors following the Varimax method described by Massart et al., supra.

The overall quality ratings (dependent variables) can be modeled as a function of the Varimax rotated PC scores for the products (independent variables). Models can be constructed using ordinary least squares (OLS), principal components regression (PCR), and partial least squares regression (PLS) routines in applicable software. PCR and PLS models can be calculated with, for instance, one to four components. In each case, the best fit equations (those with the highest R²) and those with the best predictive ability (lowest residual predictive sum of squares or the like) are obtained.

Further, respondents can score each product at various time points, for example, 1 minute, 15 minutes, and 30 minutes for overall liking and intensity of four attributes: flavor, sweetness, cooling/warming, and texture. A 15-minute rest period can be provided between each product allowing for palate cleansing.

The foregoing and other embodiments are further illustrated by the following examples, which are not intended to limit the effective scope of the claims. All parts and percentages in the examples and throughout the specification and claims are by weight of the final composition unless otherwise specified.

### EXAMPLES

The chewing gum formulations in the form of 1.7 gram pieces in slab form are prepared as follows. These examples illustrate the use of spilanthol in a chewing gum composition for achieving desirable mouth-moistening and refreshment attributes. The chewing gum compositions are prepared by suitably mixing the ingredients as described in general above.

In the following Tables, various combinations of menthyl glutarate, menthyl succinate, WS-23, and WS-3, are used. Acesulfame K refers to the potassium salt of 3,4-dihydro-6-methyl-1,2,3-oxathiazine-4-one-2,2-dioxide, commercially available from Clariant, Ltd. (Switzerland).

### Example 1

Chewing gum compositions in the form of 1.7 gram pieces in slab form are produced having the formulations shown in Table 1 with respect to individual components and weight ranges for each component (parts by weight or pbw). The amount of jambu oleoresin in Example 1 is 0.0300 parts per hundred by weight, which given a 30 wt.% concentration of spilanthol, represents about 90 ppm parts by weight.

**Table 1**

| **Description** | **Gum Control 1** | **Comparative Ex. 1 with LL Acid** | **Comparative Ex. 2 with Acid and Sodium Bicarbonate (Fizz)** | **Gum Control 2** | **Ex. 1 with Jambu** | **Comparative Ex. 3 with Trans-Pellatorine** |
|---|---|---|---|---|---|---|
| | pbw | pbw | pbw | pbw | pbw | Pbw |
| Gum Base 1 | 17.204 | 17.204 | 17.204 | 13.500 | 15.000 | 13.5000 |
| Gum Base 2 | 10.796 | 10.796 | 10.796 | 12.000 | 12.000 | 12.000 |
| Limestone | | | | 4.500 | 4.500 | 4.500 |
| Lecithin | 0.500 | 0.500 | 0.500 | 0.220 | 0.220 | 0.220 |
| Acetylated Monoglycerides | 0.500 | 0.500 | 0.500 | 0.165 | 0.165 | 0.165 |
| Mono and Diglycerides, Distilled | | | | 0.248 | 0.248 | 0.248 |
| Sorbitol | 42.867 | 37.938 | 32.113 | 34.530 | 33.640 | 33.780 |
| Mannitol | 5.000 | 5.000 | 5.000 | 11.000 | 11.000 | 11.000 |
| Xylitol, Milled | 9.600 | 9.600 | 9.600 | 9.500 | 9.500 | 9.500 |
| Glycerin | 3.068 | 3.068 | 3.068 | 7.250 | 7.250 | 7.250 |
| Tropical Fruit Flavor Art. Liquid | 2.750 | 2.750 | 2.750 | | | |
| Mint Peppermint | | | | 2.250 | 2.250 | 2.250 |
| Menthol Synthetic | | | | 0.0540 | 0.0540 | 0.0540 |
| Cooling Blend 1 | | | | 0.169 | 0.169 | 0.169 |
| Cooling Blend 1, Spray-Dried | | | | 0.135 | 0.135 | 0.135 |
| WS-23 cooling compound | 0.060 | 0.060 | 0.060 | | | |
| Cooling Compound WS-3/Artificial Mint Flavor. | 0.0600 | 0.0600 | 0.0600 | | | |
| Jambu Oleoresin | | | | | 0.0300 | |
| Tropical Fruit Flavor | 1.500 | 1.500 | 1.500 | | | |
| Citric Acid, Encapsulated | 0.7529 | 0.423 | 3.400 | | | |
| Malic Acid, Encapsulated 15% Coat | 0.753 | 0.423 | 0.189 | | | |
| Adipic Acid Encapsulated 85% | | 5.588 | 4.471 | | | |
| Encapsulated Sodium Bicarbonate | | | 4.200 | | | |
| FD&C Yellow No 6 | 0.020 | 0.020 | 0.020 | | | |
| Orange Color | 0.500 | 0.500 | 0.500 | | | |
| Blue Lake Blend | | | | 0.0240 | 0.0240 | 0.0240 |
| Aspartame | 0.300 | 0.300 | 0.300 | 0.570 | 0.570 | 0.570 |
| Ace-K | 0.150 | 0.1500 | 0.150 | 0.285 | 0.285 | 0.285 |
| LL Aspartame Encapsulated | 2.400 | 2.400 | 2.400 | 2.400 | 2.400 | 2.400 |
| LL Ace-K, Encapsulated | 1.200 | 1.200 | 1.200 | 1.200 | 1.200 | 1.200 |
| Firmenich Tingling Flexarome® Spilanthol (about 6 wt.%) Extrudate | | | | | 0.860 | |
| Optaflow® Trans-Pellatorine | | | | | | 0.750 |

A series of chewing gum compositions were prepared according to the compositions in Table 1 above. The chewing gum composition can be prepared by first melting the gum base at a temperature of about 150-175°F. Once melted and placed in a standard mixer, the remaining ingredients can be added and thoroughly mixed for about 1 to about 20 minutes.

The resulting mix then was formed into the desired final shape employing conventional techniques, e.g., extruded, rolled and cut into sticks, cast into pellets and then optionally coated, or pressed into tablets, among others.

Tests were conducted to determine which technology performed significantly better than a control gum on consumers' perceptions of key mouth moistening attributes. A composition according to the present invention was compared to a control at 90% confidence (taking into account the small sample size). Attention was focused on key attributes of mouth moistening intensity, how long moistening lasts, and how the gum compares to other gums for mouth moistening along with overall acceptability and taste attributes.

There were 52 respondents who experience dry mouth and treat it with anything other than prescription medication. The respondents had all used chewing gum in past 30 days, chewing at least 10 pieces of gum during that time. A standard screen for security and allergies was applied to the respondents, including no past 6 months participation in market research, no past year group discussion related to gum or candy, and no more than 2 market research studies in past year. The respondents were 50% male/female, distributed among age groups of 30-40, 41-45, 46-50, and 51-60. The frequency of experiencing dry mouth varied from everyday, to 4-5 times/week, to 2-3 times/week. The respondents, to treat dry mouth, had previously used water or other liquids, throat lozenges, cough drops, candy, gum, mints, or other means.

Each respondent evaluated two pairs of products (control vs. sample) in two one-hour sessions to occur on consecutive days. Each gum was chewed 20 minutes with a 10-minute rest periods between evaluations. Products were presented in a sequential monadic manner. Within each cell, presentation order of pairs was rotated and randomized within pairs and across sessions. Respondents evaluated products individually using a computer-programmed, self- administered questionnaire. After evaluating each product pair and responding to questions at various time points about overall acceptability, taste liking, mouth moistening and other key attributes, overall preference and preference for a few key attributes was asked (forced choice).

Unsalted crackers and bottled water were used as palate cleansers. A test administrator guided respondents through the process and directed timing of product evaluations and rest periods.

The tests concluded that the Jambu Acid prototype was the better performer in the mint chewing gum products, measured using the following 5 point intensity scale, where a rating of 5 was extremely mouth moistening, a rating of 4 was very mouth moistening, a rating of 3 was moderately mouth moistening, a rating of 2 was slightly mouth moistening, and a rating of 1 was not at all mouth moistening. The results are shown in Tables 2-3 below and Figures 1-4.

**TABLE 2**

| | **Control 1** | **Comp 1** | **Control 2** | **Comp 2** | **Control 3** | **Ex. 1** | **Control 4** | **Comp 3** |
|---|---|---|---|---|---|---|---|---|
| **Overall Liking Mean** | | | | | | | | |
| 1 minute | 7.1 | 7.2 | 7.1 | 7.1 | 7.3 | 7.4 | 7.0 | 6.9 |
| 10 minutes | 6.8 | 6.9 | 6.8 | 6.6 | 7.1 | 6.9 | 6.8 | 6.3 |
| 20 minutes | 6.7 | 6.6 | 6.7 | 6.4 | 6.9 | 6.7 | 6.8 | 6.2 |

| **Flavor Liking Mean** | | | | | | | | |
|---|---|---|---|---|---|---|---|---|
| 1 minute | 7.0 | 7.1 | 7.3 | 7.2 | 7.3 | 7.3 | 6.9 | 6.9 |
| 10 minutes | 7.0 | 6.9 | 6.8 | 6.8 | 7.0 | 7.0 | 7.0 | 6.4 |
| 20 minutes | 6.8 | 6.7 | 6.8 | 6.4 | 6.8 | 6.7 | 6.8 | 6.1 |

| **Sweetness Liking Mean** | | | | | | | | |
|---|---|---|---|---|---|---|---|---|
| 1 minute | 7.0 | 6.9 | 7.1 | 6.8 | 7.2 | 6.8 | 6.7 | 6.5 |
| 10 minutes | 6.7 | 6.8 | 6.6 | 6.4 | 6.9 | 6.5 | 6.6 | 6.3 |
| 20 minutes | 6.7 | 6.6 | 6.4 | 6.2 | 6.8 | 6.4 | 6.5 | 6.1 |

| **Tartness/Sourness Liking Mean** | | | | | | | | |
|---|---|---|---|---|---|---|---|---|
| 1 minute | 6.8 | 6.6 | 6.5 | 6.6 | 6.7 | 6.9 | 6.5 | 6.3 |
| 10 minutes | 6.3 | 6.4 | 6.3 | 6.0 | 6.6 | 6.9 | 6.7 | 6.5 |
| 20 minutes | 6.3 | 6.0 | 6.0 | 6.0 | 6.4 | 6.6 | 6.5 | 6.2 |

| **Tartness/Sourness Intensity Mean** | | | | | | | | |
|---|---|---|---|---|---|---|---|---|
| 1 minute | 2.5 | 3.3 | 2.5 | 3.0 | 2.9 | 3.4 | 2.8 | 2.9 |
| 10 minutes | 2.3 | 3.1 | 2.1 | 3.0 | 3.0 | 3.3 | 3.0 | 3.2 |
| 20 minutes | 2.4 | 2.9 | 2.1 | 2.9 | 2.9 | 3.3 | 2.8 | 3.0 |

| **Chew Texture Mean** | | | | | | | | |
|---|---|---|---|---|---|---|---|---|
| 1 minute | 5.4 | 4.3 | 5.4 | 4.8 | 5.5 | 5.3 | 5.3 | 5.4 |
| 10 minutes | 5.1 | 4.4 | 5.1 | 4.2 | 5.3 | 5.1 | 5.3 | 5.3 |
| 20 minutes | 5.3 | 4.7 | 5.2 | 4.3 | 5.3 | 5.23 | 5.1 | 5.3 |

| **Mouth Moistening Mean** | | | | | | | | |
|---|---|---|---|---|---|---|---|---|
| 1 minute | 3.4 | 3.8 | 3.3 | 3.5 | 3.6 | 3.8 | 3.4 | 3.7 |
| 10 minutes | 3.2 | 3.5 | 3.2 | 3.3 | 3.3 | 3.6 | 3.3 | 3.3 |
| 20 minutes | 3.2 | 3.3 | 3.2 | 3.1 | 3.2 | 3.4 | 3.0 | 3.3 |

| TABLE 3 | | |
|---|---|---|
| | Control 3 | Ex. 1 |
| Overall Preference | 46% | 54% |
| Prefer overall taste | 48% | 52% |
| Prefer for being more refreshing | 46% | 54% |
| Prefer for having a better flavor | 48% | 52% |
| Prefer for having better overall mouth moistening | 40% | 60% |
| Prefer for moistening your mouth longer | 35% | 65% |
| Prefer for having a better aftertaste | 44% | 56% |

Figure 1 is a chart showing consumer test preferences for a chewing gum composition containing spilanthol according to Example 1 compared to the same chewing gum composition without the spilanthol component;
Figure 2 is a graph showing consumer test evaluations of cooling intensity, chew texture, and mouth moistening intensity for a chewing gum composition containing spilanthol according to Example 1 compared to the same chewing gum composition without the spilanthol component or compared to an alternative mouth moistening formulation containing trans-pellatorine.

Figure 3 is a chart showing the increase in mouth moistening for a chewing gum composition containing spilanthol according to Example 1 compared to the same chewing gum composition without the spilanthol component or compared to an alternative mouth-moistening formulation containing trans-pellatorine; and
Figure 4 is a chart showing the length of time moistness lasted for a chewing gum composition containing spilanthol according to Example 1 compared to the same chewing gum composition without the spilanthol component or compared to an alternative mouth-moistening formulation containing trans-pellatorine.

In summary, the Jambu prototype was significantly preferred for 'moistening your mouth longer' and numerically preferred for all other attributes in the mint chewing gum. Jambu has significantly more intense cooling and mouth moistening at 1 minute and directionally more at 20 and 20 minutes. For length of time the moistness lasted, the Jambu prototype performed surprising better than the control or the comparisons.

### EXAMPLE 2 (not according to the invention)

A chewing gum composition in slab form (1.7 g) comprising spilanthol contained in a powder was produced having the formulations shown in Table 4 with respect to individual components and weight ranges for each component (parts by weight or pbw).

**TABLE 4**

| **Ingredient** | **Pbw** |
|---|---|
| Gum Base | 25.00 |
| Lecithin, Solid | 0.500 |
| Acetylated Monoglycerides Distilled | 0.280 |
| Sorbitol Crystalline | 43.279 |
| Mannitol, Powder | 5.5000 |
| Xylitol (Milled) | 9.5000 |
| Glycerin, (Non-GMO) | 6.2500 |
| Grape Purple | 0.0500 |
| Acai fruit flavor | 2.7300 |
| Stabl-lok® Natural Jambu spilanthol-containing powder (6 wt.%) | 0.4000 |
| (N-[4-(cyanomethyl)phenyl]-(1R,2S, 5R)-2-isopropyl-5-methylcyclohexanecarboxamide cooler | 0.6500 |
| Citric Acid | 0.8000 |
| Malic Acid | 0.8000 |
| Cooler WS 3 SD | 0.1500 |
| Aspartame PWD | 0.3000 |
| Acesulfame Potassium Milled | 0.1300 |
| Encapsulate, Aspartame | 2.3300 |
| Encapsulate, Ace K | 0.6000 |
| Monoglycerides, Distilled | 0.48 |
| Sucralose | 0.0500 |
| Vitamin B | 0.2210 |

This chewing gum product provides superior mouth-moistening attributes.

### EXAMPLE 3

A chewing gum composition in slab form (1.7 g) was produced having the formulation shown in Table 5 with respect to individual components and weight ranges for each component (parts by weight or pbw).

**TABLE 5**

| Component | Amount (pbw) |
|---|---|
| Gum Base | 13.5000 |
| Gum Base | 12.0000 |
| Limestone Ground | 4.5000 |
| Lecithin | 0.2200 |
| Acetylated Monoglycerides | 0.0990 |
| Sorbitol | 39.9513 |
| Mannitol | 5.0000 |
| Xylitol, Granular | 9.5999 |
| Glycerin | 4.7500 |
| N&A Mint pear Flavor Blend | 1.8000 |
| Optaheat B Natural® warming agent | 1.5000 |
| Menthol | 1.5000 |
| Cooler 2 | 0.4000 |
| Aspartame | 0.5132 |
| ACE-K | 0.2566 |
| LL Aspartame, Encapsulated | 1.9200 |
| LL Ace-K, Encapsulated | 0.9600 |
| Stabil-Lok® Natural Jambu FL Powder | 0.4000 |
| Warm Sensate Flavor | 1.1300 |

This chewing gum product composition provides superior mouth-moistening attributes.

### EXAMPLE 4 (not according to the invention)

A chewing gum composition in slabe form (1.7 g) was produced having the formulations shown in Table 6 with respect to individual components and weight ranges for each component (parts by weight or pbw). The amount of jambu oleoresin in Example 1 is 0.0075 parts by weight, and the amount of jambu oleoresin in Example 2 is 0.015 parts by weight, based on 100 parts total.

**TABLE 6**

| Component | Amount (pbw) |
|---|---|
| Gum Base | 13.5000 |
| Gum Base | 12.0000 |
| Limestone Ground | 4.5000 |
| Lecithin | 0.2200 |
| Acetylated Monoglycerides | 0.0990 |
| Sorbitol | 43.7758 |
| Mannitol | 5.0000 |
| Xylitol, Milled | 9.5999 |
| Glycerin | 4.7500 |
| Mint pear Flavor Blend | 1.8000 |
| Stabil-Lok® Natural Jambu Flavor Powder | 0.3000 |
| Aspartame | 0.5702 |
| Ace-K | 0.2851 |
| LL Aspartame, Encapsulated | 2.4000 |
| LL Ace-K, Encapsulated | 1.2000 |

This chewing gum product composition provides superior mouth-moistening attributes.

### EXAMPLE 5

A chewing gum product in which a jambu extract was added to the coating of the chewing gum was produced having the formulation shown in Table 7 with respect to individual components and weight ranges for each component (parts by weight or pbw).

**TABLE 7**

| Component | Amount (pbw) |
|---|---|
| **Gum Center** | |
| Gum Base | 23.954% |
| Calcium Carbonate | 3.629 |
| Sorbitol | 33.782 |
| Mannitol | 2.541 |
| Glycerin | 3.629 |
| Peppermint oil blend | 1.629 |
| Intensate® Flavor Artificial | 0.0081 |
| Menthol | 0.411 |
| WS3 cooling compound | 0.0339 |
| Cooler 2 | 0.0871 |
| Aspartame | 0.203 |
| ACE-K Encapsulated | 0.188 |
| Sucralose | 0.0363 |
| Sodium Stearate | 0.559 |
| | |

| **Gum Coating** | |
|---|---|
| Maltitol | 25.150 |
| Gum Acacia | 1.741 |
| Titanium Dioxide | 0.140 |
| Peppermint oil blend | 0.105 |
| Sweet PPMT oil | 0.105 |
| Cooler 2 | 0.0450 |
| Menthol | 0.0277 |
| Bitter Mask | 0.0040 |
| Jambu extract | 0.0500 |
| Acesulfame Potassium Milled | 0.0260 |
| Wax Candelilla, Powdered | 0.0190 |

This chewing gum product provides superior mouth-moistening attributes.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

As used herein the terms "comprising" (also "comprises," etc.), "having," and "including" is inclusive (open-ended) and does not exclude additional, unrecited elements or method steps.

As used herein the transitional term "comprising," (also "comprises," etc.) which is synonymous with ""including," ""containing," or ""characterized by," is inclusive or open-ended and does not exclude additional, unrecited elements or method steps, regardless of its use in the preamble or the body of a claim.

The singular forms "a," "an," and "the" include plural referents unless the context clearly dictates otherwise.

The endpoints of all ranges directed to the same characteristic or component are independently combinable, and inclusive of the recited endpoint.

The term "combination" is inclusive of a homogenous or non-homogenous blend, mixture, or alloy of the named components into an integrated whole. The term "homogenous" refers to a uniform blend of the components.

The word "or" means "and/or."

Providing can be accomplished by a manufacturer, distributor, or other seller that makes the product available to the consumer.

Instructing can be by means of packaging, package inserts, advertisements, web sites, and the like.

## Claims

1. A chewing gum composition comprising
(a) a chewing gum base, sweetener composition, softener, 0.05 to 1.0 weight percent menthol, and flavorant, and
(b) 75 to 300 parts per million, by weight of the chewing gum composition, of spilanthol.

2. The chewing gum composition of claim 1, wherein the spilanthol is provided in the form of a synthetic spilanthol compound and/or a liquid extracted from a plant species that comprises 20 to 70 weight percent of spilanthol.

3. The chewing gum composition of claim 2, comprising the liquid extracted from a plant species, wherein the liquid extracted from a plant species is jambu oleoresin.

4. The chewing gum composition of claim 1, comprising the spilanthol in the form of a powder comprising spilanthol in an amount of 2 to 10 weight percent, based on the weight of the powder.

5. The chewing gum composition of claim 1, wherein the spilanthol is provided in the form of both a synthetic spilanthol and a spilanthol-containing plant extract.

6. The chewing gum composition of claim 1, wherein the spilanthol is provided in the form of both a powder comprising spilanthol and a liquid extracted from a plant species that comprises 20 to 70 weight percent of spilanthol.

7. The chewing gum composition of any of claims 1-6, further comprising a food-grade acid composition that is encapsulated or contained in a powder.

8. The chewing gum composition of claim 7, wherein the food-grade acid composition is contained in the powder; and wherein the powder comprises food grade acid and spilanthol, wherein said food-grade acid composition is present in an amount of 0.01 to 5 weight percent of said chewing gum composition.

9. The chewing gum composition of any of claims 1-8, further comprising 0.1 to 5 wt.% of a mint flavorant that is natural product obtained from a plant of the Menthe genus and the Lamiaceae family, or an artificial counterpart of the natural product.

10. The chewing gum composition of any of claims 1-9, wherein the chewing gum composition exhibits a mouth moistening improvement of at least 10 percent higher than in the absence of the spilanthol.

11. The chewing gum composition of claim 1 comprising:
(a) a chewing gum base, sweetener composition, softener, and flavorant;
(b) 75 to 300 parts per million by weight of the chewing gum composition, of spilanthol;
(d) a food-grade acid composition;
(e) a mint flavorant that is natural product obtained from a plant of the Menthe genus and the Lamiaceae family, or an artificial counterpart of the natural product; and
(f) 0.05 to 1.0 weight percent of the chewing gum composition, of menthol; and
(g) 0.025 to 1.0 weight percent of the chewing gum composition, of a physiological cooling compound selected from the group consisting of carboxylamides, menthyl esters, and combinations thereof.

12. The chewing gum composition of claim 11, comprising:
(i) 0.05 to 0.15 weight percent of the chewing gum composition, of said menthol; and
(ii) 0.025 to 0.15 weight percent of the chewing gum composition, of said physiological cooling compound, wherein the weight ratio of said physiological cooling compound (ii) to said menthol (i) is 1:2 to 5:1.

13. A chewing gum product comprising a core and an outer shell, wherein said core and said outer shell have different chew textures, the core having a soft chew and the outer shell having a firm and crystalline feel, wherein,
(a) said core comprises a chewing gum composition comprising a chewing gum base, sweetener composition, softener, 0.05 to 1.0 weight percent menthol, and flavorant; and
(b) said outer shell comprises 80-220 parts per million, by weight of the chewing gum composition, of spilanthol.

14. A packaged chewing gum product comprising:
(a) a plurality of individual pieces of chewing gum product, wherein each piece of chewing gum product comprises a chewing gum composition according to any of claims 1-13;
wherein said pieces have a mouth-moistening improvement of at least about 5 percent higher than in the absence of the spilanthol; and
(b) a package assembly that contains said plurality of individual pieces of chewing gum product, said package assembly having indicia placed on an outer surface, said indicia being indicative of refreshment intensity and/or mouth-moistening effect.

## Patentansprüche

1. Kaugummi-Zusammensetzung, umfassend
(a) eine Kaugummi-Grundmasse, eine Süßstoffzusammensetzung, einen Weichmacher, 0,05 bis 1,0 Gewichtsprozent Menthol, und einen Aromastoff, und
(b) 75 bis 300 ppm, bezogen auf das Gewicht der Kaugummi-Zusammensetzung an Spilanthol.

2. Kaugummi-Zusammensetzung nach Anspruch 1, wobei das Spilanthol in Form einer synthetischen Spilantholverbindung und/oder einer Flüssigkeit bereitgestellt wird, die aus einer Pflanzenspezies extrahiert wurde, die 20 bis 70 Gewichtsprozent Spilanthol umfasst.

3. Kaugummi-Zusammensetzung nach Anspruch 2, umfassend die aus einer Pflanzenspezies extrahierte Flüssigkeit, wobei die aus einer Pflanzenspezies extrahierte Flüssigkeit Jambu-Oleoresin ist.

4. Kaugummi-Zusammensetzung nach Anspruch 1, umfassend das Spilanthol in der Form eines Pulvers, welches Spilanthol in einer Menge von 2 bis 10 Gewichtsprozent, bezogen auf das Gewicht des Pulvers, umfasst.

5. Kaugummi-Zusammensetzung nach Anspruch 1, wobei das Spilanthol in Form sowohl von synthetischem Spilanthol als auch eines spilantholhaltigen Pflanzenextrakts bereitgestellt wird.

6. Kaugummi-Zusammensetzung nach Anspruch 1, wobei das Spilanthol in Form sowohl eines Spilanthol umfassenden Pulvers als auch einer Flüssigkeit bereitgestellt wird, die aus einer Pflanzenspezies extrahiert wurde, die 20 bis 70 Gewichtsprozent Spilanthol umfasst.

7. Kaugummi-Zusammensetzung nach einem der Ansprüche 1 bis 6, des Weiteren umfassend eine Genusssäure-Zusammensetzung, die verkapselt oder in einem Pulver enthalten ist.

8. Kaugummi-Zusammensetzung nach Anspruch 7, wobei die Genusssäure-Zusammensetzung in dem Pulver enthalten ist; und wobei das Pulver die Genusssäure und Spilanthol umfasst, wobei die Genusssäure-Zusammensetzung in einer Menge von 0,01 bis 5 Gewichtsprozent der Kaugummi-Zusammensetzung vorliegt.

9. Kaugummi-Zusammensetzung nach einem der Ansprüche 1 bis 8, des Weiteren umfassend 0,1 bis 5 Gew.-% eines Minze-Aromastoffes, der ein natürliches Produkt ist, das aus einer Pflanze der Gattung Mentha und der Familie der Lamiaceae erhalten wird, oder ein künstliches Äquivalent des natürlichen Produkts.

10. Kaugummi-Zusammensetzung nach einem der Ansprüche 1 bis 9, wobei die Kaugummi-Zusammensetzung eine Verbesserung der Mundbefeuchtung von mindestens 10 Prozent im Vergleich zu jener bei Fehlen von Spilanthol zeigt.

11. Kaugummi-Zusammensetzung nach Anspruch 1, umfassend:
(a) eine Kaugummi-Grundmasse, eine Süßstoffzusammensetzung, einen Weichmacher und einen Aromastoff;
(b) 75 bis 300 ppm, bezogen auf das Gewicht der Kaugummi-Zusammensetzung an Spilanthol;
(d) eine Genusssäure-Zusammensetzung;
(e) einen Minze-Aromastoff, der ein natürliches Produkt ist, das aus einer Pflanze der Gattung Mentha und der Familie der Lamiaceae erhalten wird, oder ein künstliches Äquivalent des natürlichen Produkts; und
(f) 0,05 bis 1,0 Gewichtsprozent, bezogen auf die Kaugummi-Zusammensetzung an Menthol; und
(g) 0,025 bis 1,0 Gewichtsprozent bezogen auf die Kaugummi-Zusammensetzung einer physiologischen kühlenden Verbindung, ausgewählt aus der Gruppe bestehend aus Carboxylamiden, Menthylestern und Kombinationen davon.

12. Kaugummi-Zusammensetzung nach Anspruch 11, umfassend:
(i) 0,05 bis 0,15 Gewichtsprozent bezogen auf die Kaugummi-Zusammensetzung an Menthol; und
(ii) 0,025 bis 0,15 Gewichtsprozent bezogen auf die Kaugummi-Zusammensetzung der physiologischen kühlenden Verbindung, wobei das Gewichtsverhältnis der physiologischen kühlenden Verbindung (ii) zu dem Menthol (i) von 1:2 bis 5:1 beträgt.

13. Kaugummi-Produkt umfassend einen Kern und eine äußere Hülle, wobei der Kern und die äußere Hülle unterschiedliche Texturen beim Kauen aufweisen, wobei der Kern ein weiches Kaugefühl aufweist, und die äußere Hülle ein festes und kristallines Kaugefühl aufweist, wobei
(a) der Kern eine Kaugummi-Zusammensetzung umfasst, die eine KaugummiGrundmasse, eine Süßstoffzusammensetzung, einen Weichmacher, 0,05 bis 1,0 Gewichtsprozent Menthol und einen Aromastoff umfasst; und
(b) die äußere Hülle 80 bis 220 ppm, bezogen auf das Gewicht der Kaugummi-Zusammensetzung an Spilanthol umfasst.

14. Verpacktes Kaugummi-Produkt, umfassend:
(a) eine Vielzahl von einzelnen Stücken des Kaugummi-Produkts, wobei jedes Stück des Kaugummi-Produkts eine Kaugummi-Zusammensetzung nach einem der Ansprüche 1 bis 13 umfasst;
wobei die Stücke eine Verbesserung der Mundbefeuchtung von mindestens etwa 5 Prozent im Vergleich zu jener bei Fehlen von Spilanthol aufweisen; und
(b) eine Verpackungsanordnung, welche die Vielzahl von einzelnen Stücken des Kaugummi-Produkts umfasst, wobei die Verpackungsanordnung Kennzeichnungen aufweist, die an einer äußeren Oberfläche angeordnet sind, wobei die Kennzeichnungen auf die Intensität der Erfrischung und/oder die mundbefeuchtende Wirkung hinweisen.

## Revendications

1. Composition de gomme à mâcher, comprenant
(a) une base de gomme à mâcher, une composition d'édulcorant, un plastifiant, de 0,05 à 1,0% en poids de menthol et un aromatisant et
(b) de 75 à 300 parties par million en poids de la composition de gomme à mâcher de spilanthol.

2. Composition de gomme à mâcher suivant la revendication 1, dans laquelle le spilanthol est prévu sous la forme d'un composé de spilanthol synthétique et/ou d'un liquide extrait d'une espèce végétale, qui comprend de 20 à 70% en poids de spilanthol.

3. Composition de gomme à mâcher suivant la revendication 2, comprenant le liquide extrait d'une espèce végétale, le liquide extrait d'une espèce végétale étant une oléorésine de jambu.

4. Composition de gomme à mâcher suivant la revendication 1, comprenant le spilanthol sous la forme d'une poudre comprenant du spilanthol en une quantité de 2 à 10% en poids sur la base du poids de la poudre.

5. Composition de gomme à mâcher suivant la revendication 1, dans laquelle le spilanthol est prévu sous la forme à la fois d'un spilanthol synthétique et d'un extrait végétal contenant du spilanthol.

6. Composition de gomme à mâcher suivant la revendication 1, dans laquelle le spilanthol est prévu sous la forme à la fois d'une poudre comprenant du spilanthol et d'un liquide extrait d'une espèce végétale, qui comprend de 20 à 70% en poids de spilanthol.

7. Composition de gomme à mâcher suivant l'une quelconque des revendications 1 à 6, comprenant, en outre, une composition d'acide de qualité alimentaire, qui est encapsulée ou contenue dans une poudre.

8. Composition de gomme à mâcher suivant la revendication 7, dans laquelle la composition d'acide de qualité alimentaire est contenue dans la poudre et dans laquelle la poudre comprend un acide de qualité alimentaire et du spilanthol, la composition d'acide de qualité alimentaire étant présente en une quantité représentant de 0,01 à 5% du poids de la composition de gomme à mâcher.

9. Composition de gomme à mâcher suivant l'une quelconque des revendications 1 à 8, comprenant, en outre, de 0,1 à 5% en poids de menthe aromatisante, qui est un produit naturel obtenu d'un végétal du genre menthé et de la famille des lamiacées ou un analogue artificiel du produit naturel.

10. Composition de gomme à mâcher suivant l'une quelconque des revendications 1 à 9, dans laquelle la composition de gomme à mâcher donne une amélioration de l'humectage de la bouche d'au moins 10% plus grande qu'en l'absence du spilanthol.

11. Composition de gomme à mâcher suivant la revendication 1, comprenant :
(a) une base de gomme à mâcher, une composition d'édulcorant, un plastifiant et un aromatisant ;
(b) de 75 à 300 parties par million en poids de la composition de gomme à mâcher de spilanthol ;
(d) une composition d'acide de qualité alimentaire ;
(e) une menthe aromatisante, qui est un produit naturel obtenu à partir d'un végétal du genre menthé et de la famille des lamiacées ou un analogue artificiel du produit naturel et
(f) de 0,05 à 1,0% en poids de la composition de gomme à mâcher de menthol et
(g) de 0,025 à 1,0% en poids de la composition de gomme à mâcher d'un composé physiologique rafraîchissant choisi dans le groupe de carboxylamides, des esters de menthyle et de leurs combinaisons.

12. Composition de gomme à mâcher suivant la revendication 11, comprenant :
(i) de 0,05 à 0,15% en poids de la composition de gomme à mâcher de menthol et
(ii) de 0,025 à 0,15% en poids de la composition de gomme à mâcher du q physiologique rafraîchissant, le rapport en poids du composé (ii) physiologique rafraîchissant au menthol (i) allant de 1:2 à 5:1.

13. Produit de gomme à mâcher comprenant un noyau et une coque extérieure, le noyau et la coque extérieure ayant des textures de mastication différentes, le noyau ayant une mastication souple et la coque extérieure donnant une sensation ferme et cristalline, dans lequel
(a) le noyau comprend une composition de gomme à mâcher comprenant une base de gomme à mâcher, une composition d'édulcorant, un plastifiant, de 0,05 à 1,0% en poids de menthol et un aromatisant et
(b) la coque extérieure comprend de 80 à 220 parties par million par poids de la composition de gomme à mâcher de spilanthol.

14. Produit de gomme à mâcher conditionné comprenant :
(a) une pluralité de portions individuelles de produit de gomme à mâcher, chaque portion de produit de gomme à mâcher comprenant une composition de gomme à mâcher suivant l'une quelconque des revendications 1 à 13 ;
les portions ayant une amélioration de l'humectage de la bouche plus grande d'au moins environ 5% qu'en l'absence du spilanthol et
(b) un ensemble de conditionnement, qui contient la pluralité de portions individuelles de produit de gomme à mâcher, l'ensemble de conditionnement ayant des signes placés sur une surface extérieure, les signes indiquant l'intensité de rafraîchissement et/ou de l'effet d'humectage de la bouche.
